# EUROPEAN PATENT APPLICATION

(11) **EP 3 539 437 A1**
(43) Date of publication of application: **18.09.2019**
(21) Application number: 17869689.4
(22) Date of filing: 08.02.2017
(51) Int. Cl.: A47L 9/24

(54) **EXTENSION TUBE FOR ELECTRIC VACUUM CLEANER**

(30) Priority: 09.11.2016 JP 2016219070
(71) Applicant: Sharp Kabushiki Kaisha, Sakai City, Osaka 590-8522 (JP)
(72) Inventor: OKA, Yasuhiro, Sakai City, Osaka 590-8522 (JP); OHNISHI, Yuhji, Sakai City, Osaka 590-8522 (JP)
(74) Representative: Treeby, Philip David William
(86) International application number: PCT/JP2017/004583
(87) International publication number: WO 2018/087936

(57) **Abstract**

Provided is an extension tube for electric vacuum cleaner, which has a reduced weight, is easier to grip, and is easier to operate. This extension tube for electric vacuum cleaner connects the intake port body having an intake port with the vacuum cleaner body which is connected to the intake port body and which sucks in dust via the intake port, the extension tube being characterized by having a pipe made from dry carbon.

## Description

### [Technical Field]

The present invention relates to an extension tube for an electric vacuum cleaner.

### [Background Art]

To take an example of a traditional extension tube for an electric vacuum cleaner, Patent Literature 1 suggests an extension tube comprising a tube body; a cover attached to an outer surface of the tube body and extending in a longitudinal direction; an insulating resin plate provided at a space between the tube body and the cover; and lead wires placed on and supported by the insulating resin plate, wherein both ends of each lead wire are exposed to the outside so as to be electrically connectable with terminals of a vacuum cleaner body and of an intake port body.

### [Citation List]

### [Patent Literature]

[PTL 1]
Japanese Unexamined Patent Application Publication No. 2012-249699

### [Summary of Invention]

### [Technical Problem]

The extension tube described in Patent Literature 1 becomes thick because of comprising the insulating resin plate; the lead wires; and the cover, each of which being placed on an outer surface of the tube body and extending along a longitudinal direction, resulting in an increase in a total weight of the extension tube in addition to impairing ease of gripping the extension tube; therefore, there arises a problem that operability of the extension tube decreases at a time when determining a direction of the intake port body with use of the extension tube.

In view of such a problem above, the present invention has an object of providing an extension tube for an electric vacuum cleaner having a reduced weight and being easier to be gripped in addition to being easier to be operated.

### [Solutions to Problem]

The present invention provides an extension tube for an electric vacuum cleaner, the extension tube connecting the intake port body having an intake port with the vacuum cleaner body which is connected to the intake port body and which sucks in dust via the intake port, wherein
the extension tube is characterized by having a pipe made from dry carbon.

The present invention also provides the extension tube comprising a tube body; a first connecting pipe unit and a second connecting pipe unit provided at both ends of the tube body; and a conductive unit laid in the first connecting pipe unit, the tube body, and the second connecting pipe unit therethrough, wherein
the conductive unit has conductive cables having at both ends thereof male terminals and female terminals, respectively;
the first connecting pipe unit has a first fixed portion connected with one end of the tube body and also has a first terminal holder communicating with the first fixed portion having a first drawing port for drawing the male terminals of the conductive cables outside; and
the second connecting pipe unit has a second fixed portion connecting with the other end of the tube body and also has a second terminal holder communicating with the second fixed portion having a second drawing port for drawing the female terminals of the conductive cables outside.

### [Advantageous Effects of Invention]

The extension tube of the present invention is formed of a lightweight and yet strong pipe, that is, an extension tube, and makes it easier to operate the electric vacuum cleaner.

For example, the extension tube can connect the intake port body having a rotary brush installed therein and driven by a motor to the vacuum cleaner body, can supply electric power from the vacuum cleaner body to the motor, and is usable for the electric vacuum cleaner for cleaning a floor while rotating the rotary brush installed in the intake port body. This extension tube is configured to compactly install the conductive unit in the tube body; and the tube body is configured not to be thick and is designed to have a reduced weight (or to be light in weight) and to be easier to grip (or to be easily gripped), with the result that the extension tube can improve handleability of the intake port body to change its direction (or can make it easy to change a direction of the intake port body).

### [Brief Description of Drawings]

Figure 1 illustrates a left-side view of an electric vacuum cleaner in accordance with Embodiment 1 of the present invention.
Figure 2 illustrates a perspective view of the vacuum cleaner body of the electric vacuum cleaner in accordance with Embodiment 1.
Figure 3 illustrates a left-side cross-section view of an inner structure of an operating portion in a handle of the vacuum cleaner body of Fig. 2.
Figure 4 illustrates a left-side cross-section view of an inner structure of the vacuum cleaner body of Fig. 2.
Figure 5 illustrates a perspective view of a disassembled housing of a drive unit of the vacuum cleaner body of Fig. 2.
Figure 6(A) illustrates the electric vacuum cleaner in accordance with Embodiment 1 that is placed on a floor; and Figure 6(B) illustrates the electric vacuum cleaner in accordance with Embodiment 1 that lies on a floor.
Figure 7 illustrates an exploded view of the drive unit of the electric vacuum cleaner in accordance with Embodiment 1.
Figure 8(A) illustrates a left-side view of the drive unit; and Figure 8(B) illustrates a left-side view of the vacuum cleaner body.
Figure 9(A) illustrates a cross-section view taken from line I-I of Fig. A(A); and Figure 9(B) illustrates a cross-section view taken from line I-I of Fig. A(B).
Figure 10(A) illustrates a perspective view of a dust cup to be installed in the electric vacuum cleaner in accordance with Embodiment 1; and Figure 10(B) illustrates an exploded view of the dust cup.
Figure 11(A) illustrates a front view of the dust cup to be installed in the electric vacuum cleaner in accordance with Embodiment 1; Figure 11(B) illustrates a cross-section view taken from line I-I of Fig. 11(A); and Figure 11(C) illustrates a cross-section view taken from line II-II of Fig. 11(A).
Figure 12(A) illustrates a plan cross-section view of a lower part of a dust cup unit; and Figure 12(B) illustrates a side cross-section view of the dust cup unit.
Figure 13(A) illustrates a front view of an extension tube of the electric vacuum cleaner in accordance with Embodiment 1; Figure 13(B) illustrates a side view of the extension tube; and Figure 13(C) illustrates a cross-section view taken from line I-I of Fig. 13(A).
Figure 14 illustrates an exploded view of the extension tube of Fig. 13(A).
Figure 15 illustrates an explanatory view of an inner structure of a first connecting pipe unit and a second connecting pipe unit of the extension tube of Fig. 13(A) which are viewed from the front side.
Figure 16 illustrates a transverse cross-section view of the tube body of the extension tube of Fig. 13(A).
Figure 17 illustrates an explanatory view of a layered structure of the tube body of the extension tube of Fig. 13(A).
Figure 18(A) illustrates a front view of a conductive unit in the extension tube of Fig. 13(A); Figure 18(B) illustrates a side view of the conductive unit; and Figure 18(C) illustrates a rear view of the conductive unit.
Figure 19 illustrates an exploded view of the conductive unit of Fig. 18(A).
Figure 20(A) illustrates a cross-section view taken from line I-I of Fig. 18(A); Figure 20(B) illustrates a cross-section view taken from line II-II of Fig. 18(A); and Figure 20(C) illustrates a cross-section view taken from line III-III of Fig. 18(A).
Figure 21 illustrates lead wires in a cover plate of the conductive unit of Fig. 18(A).
Figure 22 illustrates a transverse cross-section view of the first connecting pipe unit of the extension tube of Fig. 13(A).
Figure 23 illustrates a bottom view of an intake port body of the electric vacuum cleaner in accordance with Embodiment 1.
Figure 24 illustrates a side view of the intake port body illustrated in Fig. 23.
Figure 25 illustrates a cross-section view of the intake port body taken from line I-I of Fig. 23.
Figure 26 illustrates a cross-section view of the intake port body taken from line II-II of Fig. 23.

### [Description of Embodiments]

### Embodiment 1

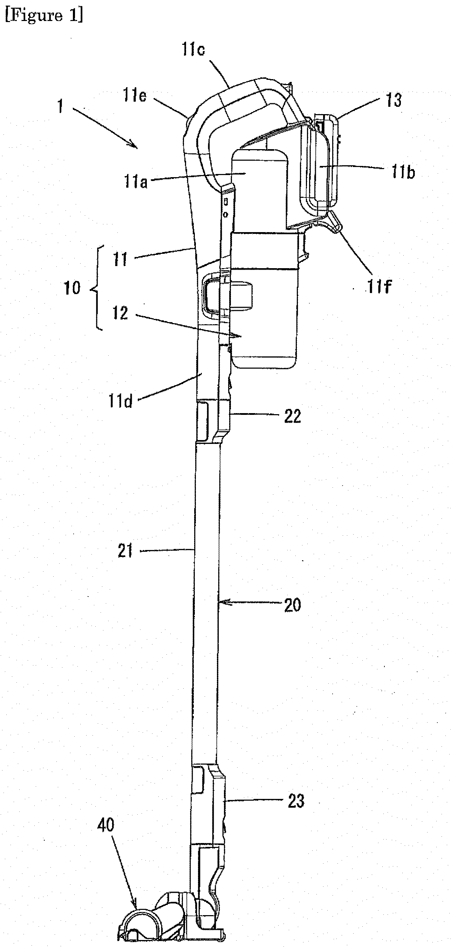

Figure 1 illustrates a left-side view of an electric vacuum cleaner in accordance with Embodiment 1 of the present invention.

An electric vacuum cleaner 1 in accordance with Embodiment 1 comprises a vacuum cleaner body 10, an extension tube 20, and an intake port body 40. The extension tube may or may not have a structure that can extend the tube itself. Unlike a handheld vacuum cleaner in which an intake port body is attached directly to the vacuum cleaner body, the vacuum cleaner of the present invention can be used as a stick vacuum cleaner having the extension tube installed between the intake port body and the vacuum cleaner body, and has a long distance from the electric vacuum cleaner body to the intake port body.

### Vacuum Cleaner Body

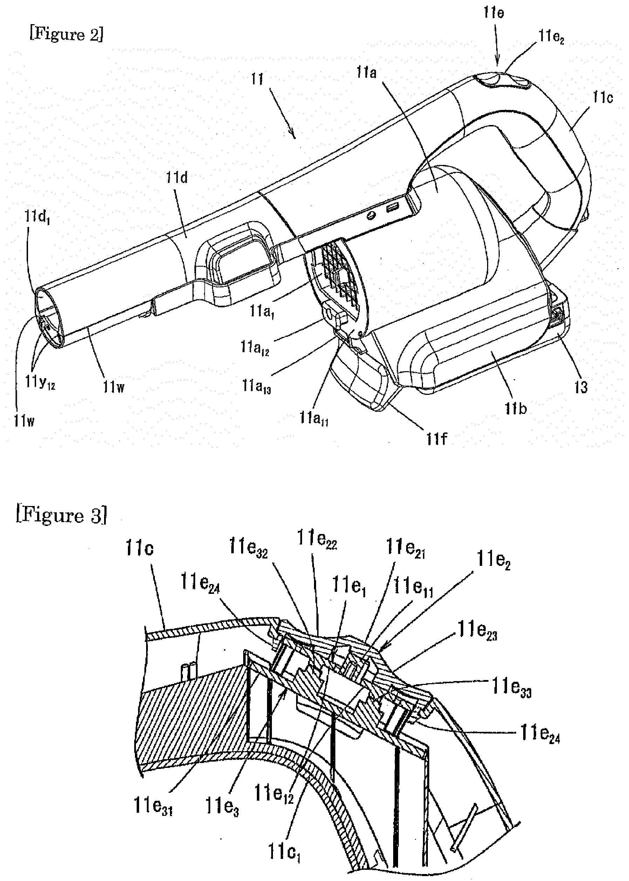

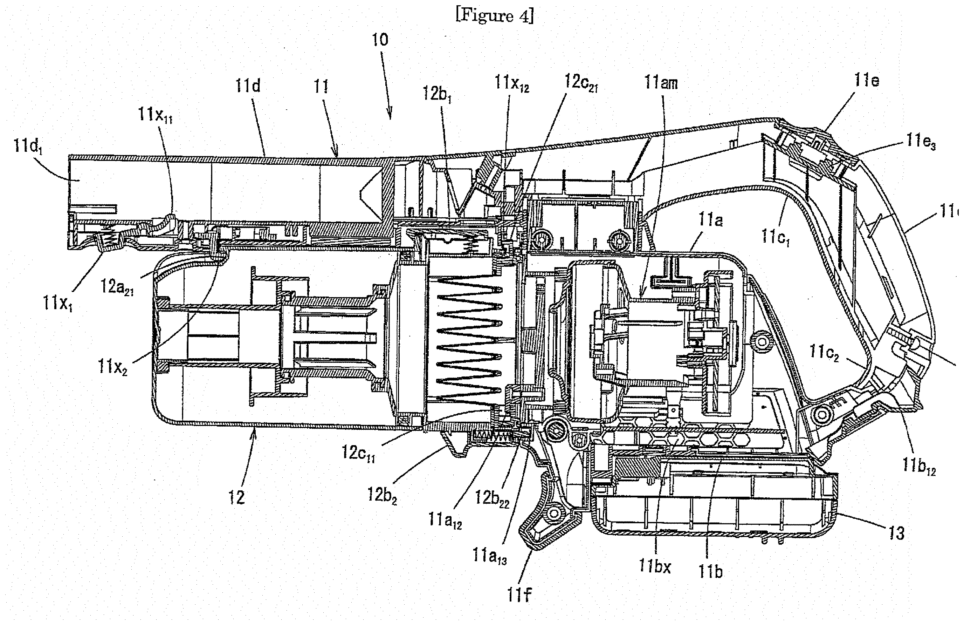

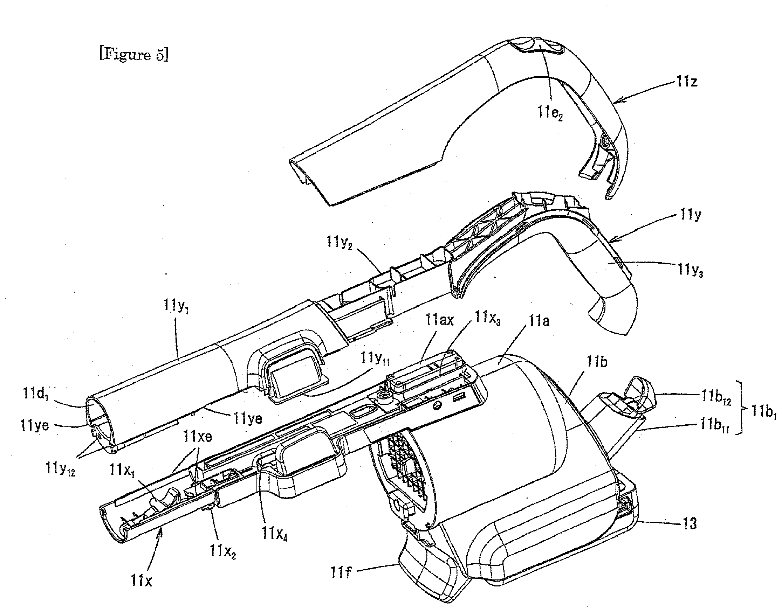

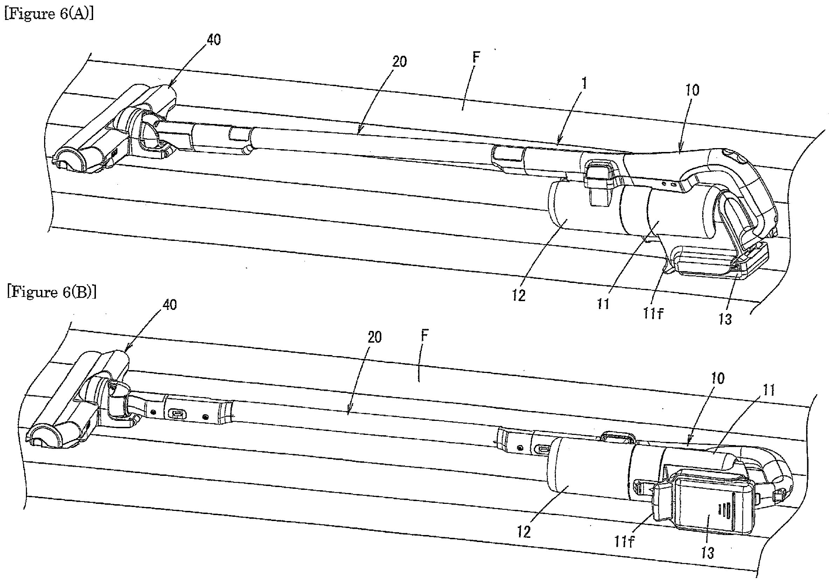

Figure 2 illustrates a perspective view of the vacuum cleaner body of the electric vacuum cleaner in accordance with Embodiment 1; and Figure 3 illustrates a left-side cross-section view of an inner structure of an operating portion in a handle of the vacuum cleaner body of Fig. 2. Figure 4 illustrates a left-side cross-section view of an inner structure of the vacuum cleaner body of Fig. 2; and Figure 5 illustrates a perspective view of a disassembled housing of a drive unit of the vacuum cleaner body of Fig. 2. Figure 6(A) illustrates the electric vacuum cleaner in accordance with Embodiment 1 that is placed on a floor; and Figure 6(B) illustrates the electric vacuum cleaner in accordance with Embodiment 1 that lies on a floor.

The vacuum cleaner body 10 comprises a drive unit 11, a dust cup unit 12 detachably attached to the drive unit 11, and a battery 13.

### Drive Unit

As illustrated in Fig. 2, Fig. 4, and Fig. 5, the drive unit 11 has a body 11a containing an electric blower 11am; a battery mounting part 11b communicating with the body 11a; a handle 11c having two ends that communicate with the body 11a and the battery mounting part 11b, respectively; and an intake tube 11d that communicates with a joint part connecting the body 11a to the handle 11c and projects in an opposite direction from the handle 11c.

The component parts of the drive unit 11 will be described below on the basis of the following specific directions: The intake tube 11d side is regarded as the front side; the handle 11c side is regarded as the rear side; the battery mounting part 11b side is regarded as the bottom side; the opposite side from the battery mounting part 11b is regarded as the upper side; the left side in a state where the handle 11c is positioned frontward is regarded as a left direction; and the right side in this state of the handle is regarded as a right direction.

The body 11a is configured to have a shell which is a cylindrical housing part having a front opening 11a₁, and this front opening 11a₁ has lattice-shaped ribs.

The body 11a has a fitting convex portion 11ax placed on its top surface, and the fitting convex portion 11ax has on its top surface an opening that draws lead wires from the body 11a to the outside.

The body 11a has an inner flange along a fringe of the front opening 11a₁, and a lower part of the inner flange is a wide-width inner flange wide portion 11a₁₁.

The inner flange wide portion 11a₁₁ is provided with the following component parts: a locking convex portion 11a₁₂ and an engaging concave portion 11a₁₃ detachably locking to a locking concave portion 12c₁₁ and an engaging nail 12b₂₃, respectively, of a second locking mechanical section 12b₂, which is provided to the dust cup unit 12 (which will be described below). The locking convex portion 11a₁₂ projects toward the bottom side, and the engaging concave portion 11a₁₃ opens toward the front side.

The battery mounting part 11b opens toward the bottom side and the rear side, and has a concave portion having terminals in its back that are electrically connectable with terminals of the battery 13; and the battery mounting part is configured to enable the battery 13 to be inserted into its concave portion from its rear side and to be mounted therein and also is configured to enable the battery 13 to be drawn therefrom toward the rear side and to be removed (or detached) from the concave portion. The battery mounting part 11b is configured to have concave channels that extend in a front-rear direction and are placed on a right-left inner side surface of the concave portion. The battery 13 is configured to have convex portions on its right-left side surface so that the convex portions on the both sides can respectively slide and fit into the concave channels on the both sides at a time when the battery 13 is mounted into the battery mounting part 11b.

The battery mounting part 11b has an exhaust opening 11bx on a right-side surface of a housing of the battery mounting part, and the exhaust opening is to exhaust an air current from the electric blower 11am to the outside (see Fig. 4).

The handle 11c has an upper curved portion 11c₁ and a lower curved portion 11c₂, both of which roughly having the shape of the letter "U"; and the upper curved portion 11c₁ has an operating portion 11e on its external side.

As illustrated in Fig. 3 and Fig. 4, the operating portion 11e has the following component parts: a concave portion 11e₁ formed in a plastic housing that constitutes the upper curved portion 11c₁ of the handle 11c; a pad 11e₂ that is made of an elastic material (rubber, elastomer, etc.) and is mounted on the external side of the concave portion 11e₁; and a switch unit 11e₃ provided inside the concave portion 11e₁ (inside the housing).

The operating portion 11e has a convex rib 11e₁₁ in a center of the concave portion 11e₁; and the convex rib 11e₁₁ has a pair of U-shaped slits formed at its front and rear positions; and an inner area of each U-shaped slit is an elastic and deformable blade spring 11e₁₂. Each blade spring 11e₁₂ has a convex portion on its lower surface. The U-shaped slits of the concave portion 11e₁ have locking openings formed in front of and the back of the slits, respectively; and a pair of front and rear inserting locking fragments 11e₂₄ of the pad 11e₂ (which will be described below) are respectively inserted into the locking openings.

The pad 11e₂ has, on its upper surface side, concave portions 11e₂₂ and 11e₂₃ in front of and the back of a center portion 11e₂₁, respectively. The pad 11e₂ has, on its lower surface side, a convex portion at a corresponding position of the center portion 11e₂₁ and at a corresponding position of the pair of concave portions 11e₂₂ and 11e₂₃; and these convex portions have the inserting locking fragments 11e₂₄ formed at their front and rear positions, respectively. The center portion 11e₂₁ comes in contact with the convex rib 11e₁₁; and the concave portions 11e₂₂ and 11e₂₃ placed at the front and at the back come in contact with the blade springs 11e₁₂, respectively.

The switch unit 11e₃ in the handle 11c has a circuit board 11e₃₁ supported and fixed by a rib structure in the upper curved portion 11c₁ and also has a pair of front switch 11e₃₂ and rear switch 11e₃₃ provided on the circuit board 11e₃₁.

In this operating portion 11e, the circuit board 11e₃₁ is configured to enable the following operations. For example, power is turned on by pushing the front switch 11e₃₂ or the rear switch 11e₃₃. After that, pushing the front switch 11e₃₂ once turns on a high mode; pushing the front switch twice turns on a standard mode; and pushing the front switch three times or more allows these modes to repeat. The power can be shut down by pushing the rear switch 11e₃₃ when the power is on.

When a user operates the operating portion 11e and pushes the front concave portion 11e₂₂ or the rear concave portion 11e₂₃ of the pad 11e₂ with his finger, the front switch 11e₃₂ or the rear switch 11e₃₃ is pushed by the blade spring 11e₁₂. If the user squeezes tight on the pad 11e₂ during cleaning, the user's palm would not push in the front concave portion 11e₂₂ or the rear concave portion 11e₂₃, and a misoperation unintended by the user is prevented, because the center portion 11e₂₁ placed between the front concave portion 11e₂₂ and the rear concave portion 11e₂₃ of the pad 11e₂ projects and is supported by the convex rib 11e₁₁.

As illustrated in Fig. 5, the intake tube 11d and the handle 11e are assembled (or built) with a first member 11x, a second member 11y, and a third member 11z (which will be described below).

As illustrated in Fig. 4 and Fig. 5, the first member 11x extends in a front-rear direction and has at its front end a concave portion containing a locking member 11x₁, a hooking member 11x₂, etc.; and the first member also has at its rear end a fitting opening 11x₃ into which the fitting convex portion 11ax of the body 11a is fitted.

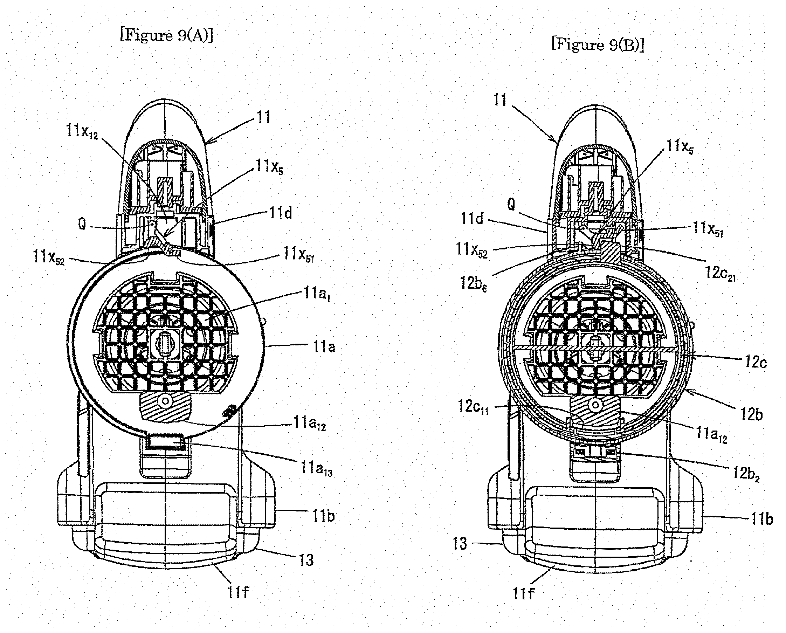

The locking member 11x₁ is swingably installed in the first member 11x so as to rotate on a horizontal axis; and in a state where the above-described component parts are assembled, the front end of the locking member 11x functions as a push button that projects downward from an opening formed on the first member 11x to the outside. A rear end of the locking member 11x functions as an engaging nail 11x₁₁ that detachably engages with an engaging concave portion 22a₃₁ (see Figs. 9(A) to 9(C)) of a first connecting pipe unit 22 (to be described below) of the extension tube 20 at a time when the extension tube 20 is inserted into a front opening 11d₁ of the intake tube 11d. In a state where the above-described component parts are assembled, a coil spring is placed between the first member 11x and the second member 11y, and biases downward the front end of the locking member 11x (to the outside).

The hooking member 11x₂ detachably locks into a locking concave portion 12a₂₁ (to be described below) of the dust cup unit 12 installed in the vacuum cleaner body 10, and projects downward from the opening formed on the first member 11x to the outside.

The first member 11x has, on its left-side surface of its middle part in a front-rear direction, a connection port 11x₄ that is connected with an outflow port 11y₁₁ (to be described below) of the second member 11y; and the first member also has, on its lower surface side of its rear end, a concave portion, where contains a first locking mechanical section 12b₁, and a concave portion 11x₁₂, into which a positioning convex portion 12c₂₁ is fitted, (which will be described below) of the dust cup unit 12 installed in the vacuum cleaner body 10.

The second member 11y has the following component parts: a front tube 11y communicating the front opening 11d with the outflow port 11y₁₁; an intermediate rib structure portion 11y₂ communicating with the front tube 11y₁; and an inner handle structure portion 11y₃ communicating with the intermediate rib structure portion 11y₂ so as to form an inner part of the handle 11c. The front tube 11y₁ has, at its lower surface side-front end, a pair of female terminals 11y₁₂ electrically connected with the pair of lead wires (not illustrated), respectively, that is drawn from the body 11a; and the inner handle structure portion 11y₃ contains the switch unit 11e₃ of the operating portion 11e in its curved intermediate portion.

The third member 11z is to cover the intermediate rib structure portion 11y₂ and the inner handle structure portion 11y₃, and has the pad 11e₂ of the operating portion 11e in its intermediate portion.

The battery mounting part 11b has at its rear part a junction 11b₁ joining with a rear end of the second member 11y and a rear end of the third member 11z. This junction 11b₁ comprises a fixed projecting portion 11b₁₁ and a holding member 11b₁₂ provided swingably on the fixed projecting portion 11b₁₁. The holding member 11b₁₂ is operated at a time when the battery 13 is removed (or detached).

One example of how the first member 11x, the second member 11y, and the third member 11z are assembled is that firstly the fitting opening 11x₃ of the first member 11x is fitted to the fitting convex portion 11ax of the body 11a.

Secondly the pair of lead wires (not illustrated) drawn from the body 11a is electrically connected with the pair of female terminals 11y₁₂ of the second member 11y, respectively; then the pair of female terminals 11y₁₂ is attached to a front end of the second member 11y; and then the second member 11y is placed on the first member 11x. This enables the outflow port 11y₁₁ of the second member 11y to be connected with the connection port 11x₄ of the first member 11x, and enables the rear end of the second member 11y to come in contact with the fixed projecting portion 11b₁₁ of the junction 11b₁.

The two component parts the second member 11y on top of the first member 11x are placed in an ultrasonic welding machine; and left and right edges 11xe of the front end of the first member 11x are ultrasonic-welded onto left and right edges 11ye of the front tube 11y₁ of the second member 11y, respectively. The reference sign 11w in Fig. 2 indicates a welding portion. The first member 11x and the second member 11y that are partially ultrasonic-welded as described above render any tapping screws unnecessary for coupling these two component parts, leading to a reduction in the number of parts and a weight reduction. The first member 11x and the second member 11y are made of, for example, an ABS resin.

Lastly the holding member 11b₁₂ of the junction 11b is swung toward the second member 11y side, and then the third member 11z is placed on the second member 11y. This enables the rear end of the third member 11z to hold down the holding member 11b₁₂.

The third member 11z is connected with the second member 11y with use of a tapping screw N; with the result that the rear end of the second member 11y and the rear end of the third member 11z join with the junction 11b₁; and the handle 11c and the intake tube 11d are formed.

As illustrated in Fig. 6(A), in the vacuum cleaner body 10, a support member 11f for supporting the vacuum cleaner body 10 is provided at a front end of the battery mounting part 11b so that the electric vacuum cleaner 1 can be placed on a floor surface F at a time when cleaning is discontinued. An example of a material of the support member 11f is hard rubber.

This support member 11f is formed in a curved shape, in which a lower end thereof slightly protrudes to the front side, as viewed from the side surface side; and as viewed from the front side, the lower end surface is formed in an arc shape.

Since a space is provided at a lower part of the extension tube 20 of the electric vacuum cleaner 1 in the state of Fig. 6 (A), there is a possibility that the extension tube 20 may be damaged if a force is applied from directly above. In the present invention, by forming the lower end surface of the support member 11f in an arc shape, breakage of the extension tube 20 is prevented, because when the force is applied to the extension tube 20 from directly above, the vacuum cleaner loses its balance and collapses, resulting in a state of lying down as illustrated in Fig. 6(B). When cleaning is discontinued, the support member 11f can be placed so as to be hooked on a top plate of a table or a backrest of a chair so as to lean the electric vacuum cleaner 1, instead of placing the electric vacuum cleaner 1 on the floor surface F.

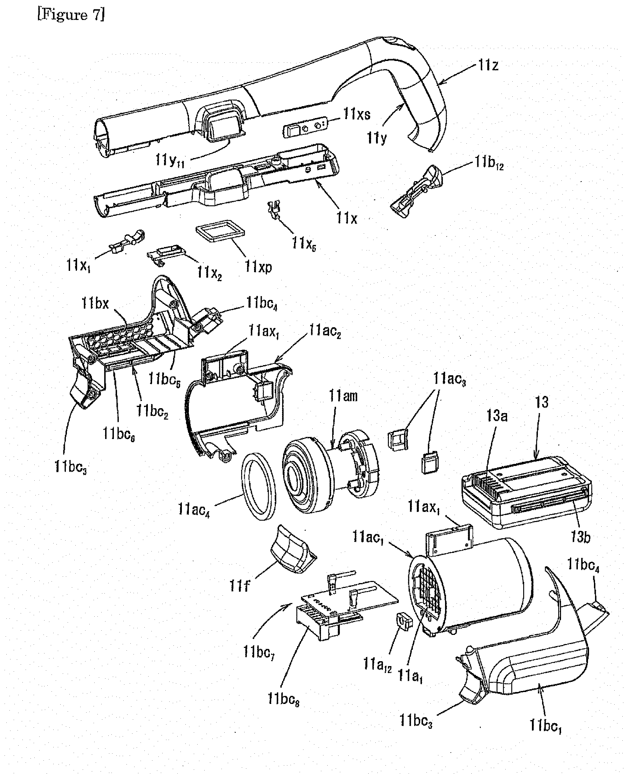

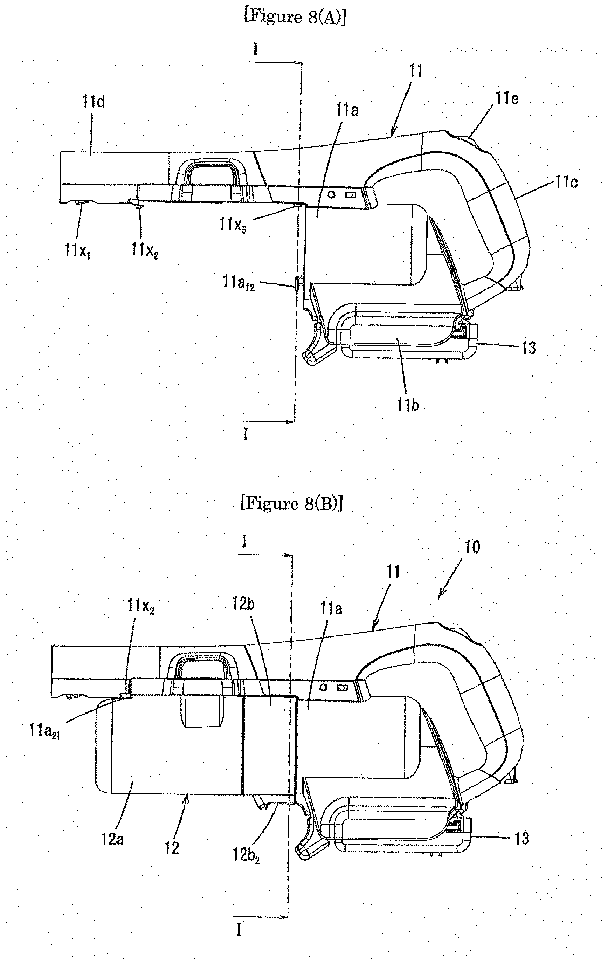

Figure 7 illustrates an exploded view of the drive unit of the electric vacuum cleaner in accordance with Embodiment 1; and Figure 8(A) illustrates a left-side view of the drive unit, and Figure 8(B) illustrates a left-side view of the vacuum cleaner body. Figure 9(A) illustrates a cross-section view taken from line I-I of Fig. A(A), and Figure 9(B) illustrates a cross-section view taken from line I-I of Fig. A(B).

In the following, the component parts of the drive unit 11 will be further described through the use of Fig. 2 to Fig. 9.

The body 11a of the drive unit 11 includes a pair of left electric blower cover 11ac₁ and right electric blower cover 11ac₂ for housing the electric blower 11am.

The front opening 11a₁ of the body 11a is integrally formed at a front end of the left electric blower cover 11ac₁; and a half portion 11ax₁ of the fitting convex portion 11ax is integrally formed on each of the left electric blower cover 11ac₁ and the right electric blower cover 11ac₂. The locking convex portion 11a₁₂ is installed in the front opening 11a₁.

The body 11a has in its inside a pair of vibration-preventing rubber parts 11ac₃ that secures a rear end of the electric blower 11am to the pair of left electric blower cover 11ac₁ and right electric blower cover 11ac₂ and also has a packing 11ac₄ placed between a front end of the electric blower 11am and an inner surface of a periphery of the front opening 11a₁.

The battery mounting part 11b of the drive unit 11 includes a pair of left battery mounting part housing 11bc₁ and right battery mounting part housing 11bc₂ connected by screws (not illustrated) with a lower part of the body 11a.

The right battery mounting part housing 11bc₂ has the exhaust opening 11bx formed on its side surface; and at a front end and a rear end of the left battery mounting part housing 11bc₁ and the right battery mounting part housing 11bc₂ each, a pair of half portions 11bc₃, which becomes a core of the support member 11f, and a pair of half portions 11bc₄ of the fixed projecting portion 11b₁₁ are integrally formed. When assembling the pair of left battery mounting part housing 11bc₁ and right battery mounting part housing 11bc₂, the holding member 11b₁₂ is swingably attached to the pair of half portions 11bc₄; and the support member 11f is attached so as to cover the pair of half portions 11bc₃ after assembly. In this case, the support member 11f may be made of rubber to cover these half portions. Also, these half portions may be pasted with an adhesive.

A partition plate 11bc₅ is continuously connected from the front end to the rear end of each of the battery mounting part housings 11bc₁ and 11bc₂; and at a lower end of a side wall of the battery mounting part housings, a lower end side wall portion 11bc₆ forming a concave channel for supporting a convex portion 13b on the left and right side surfaces of the battery 13 is continuously provided so as to be slidable in the front-rear direction.

In the battery mounting part 11b, there is a circuit board 11bc₇ having a terminal part 11bc₈ that is electrically connectable with a terminal part 13a of the battery 13.

The handle 11c and the intake tube 11d of the drive unit 11 include the first member 11x, the second member 11y, and the third member 11z.

In the first member 11x, there is provided an LED board 11xs having a plurality of LED lights which are turned on when the electric vacuum cleaner 1 is operating and when suction power is strong.

In the first member 11x, a packing 11xp is attached to an outflow port (not illustrated) joining with the outflow port 11y₁₁ of the second member 11y; and the locking member 11x₁ and the hooking member 11x₂ are attached to the front end side of the first member.

In the concave portion 11x₁₂ provided at a rear part of the outflow port of the intake tube 11d, a filter attachment forgetting prevention member 11x₅ is attached so as to be rotatable around a shaft Q extending in the front-rear direction (see Fig. 4 and Fig. 9(A)). This filter attachment forgetting prevention member 11x₅ (which may be hereinafter referred to as "attachment forgetting prevention member 11x₅") has a function of preventing the dust cup unit 12 with no filter portion 12c from being mounted even if the dust cup unit is about to be attached to the body 11a of the drive unit 11. This will be described in detail below.

### Dust Cup Unit

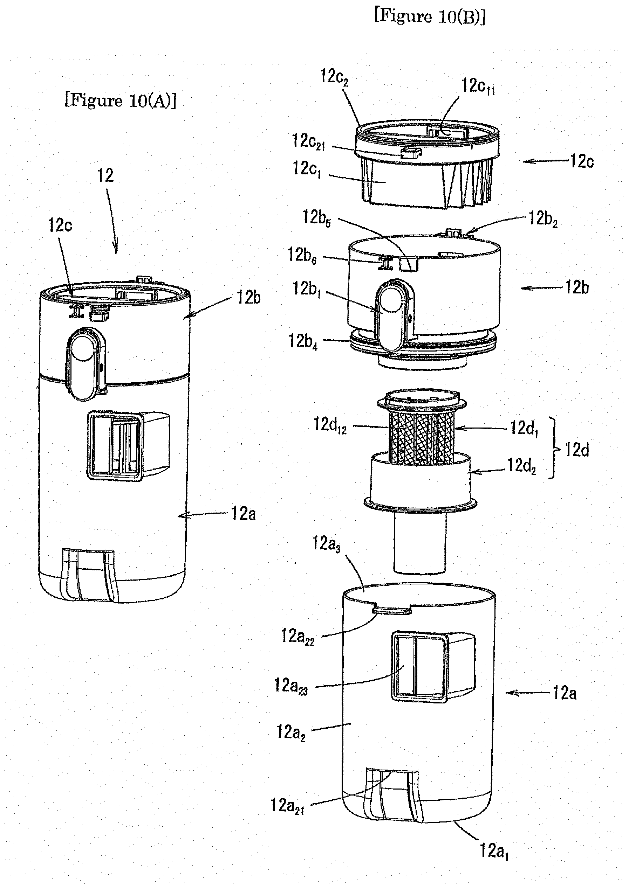

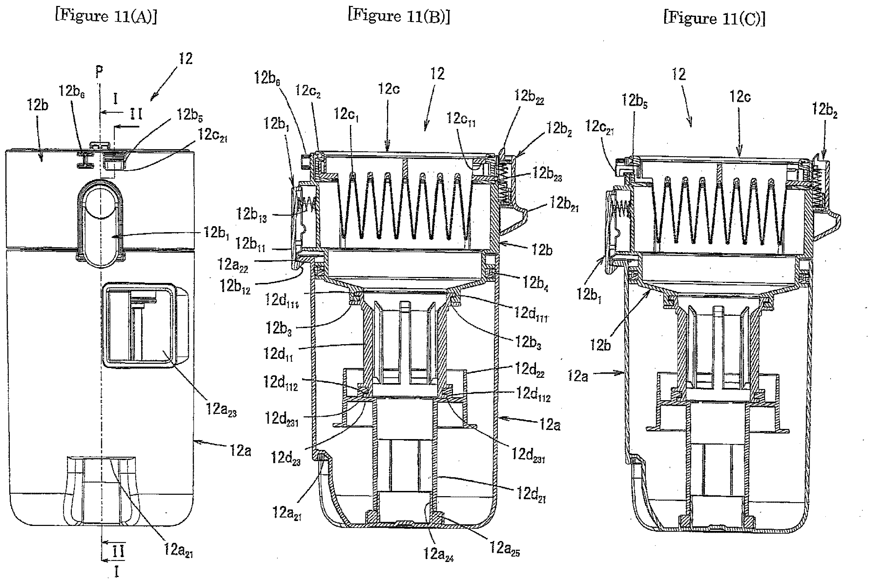

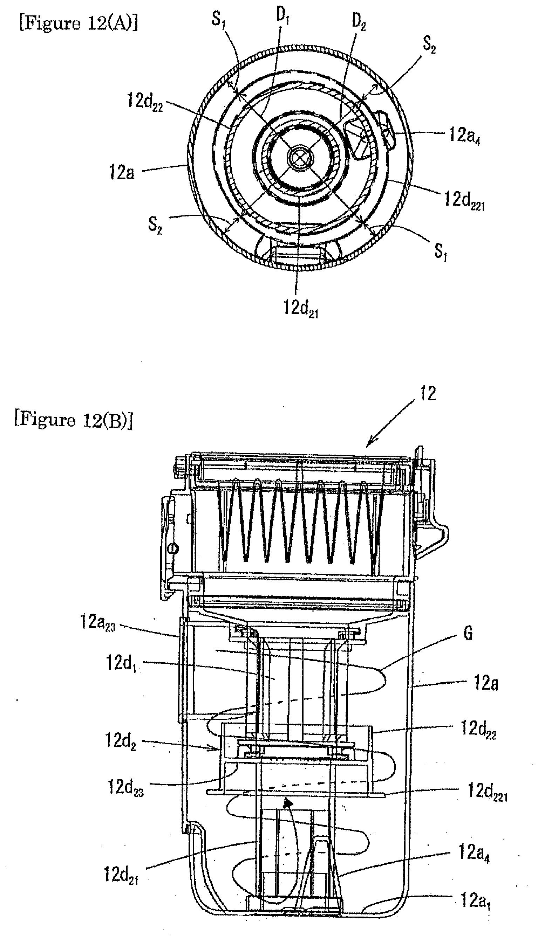

Figure 10(A) illustrates a perspective view of a dust cup to be installed in the electric vacuum cleaner in accordance with Embodiment 1, and Figure 10(B) illustrates an exploded view of the dust cup. Figure 11(A) illustrates a front view of the dust cup to be installed in the electric vacuum cleaner in accordance with Embodiment 1; Figure 11(B) illustrates a cross-section view taken from line I-I of Fig. 11(A); and Figure 11(C) illustrates a cross-section view taken from line II-II of Fig. 11(A). Figure 12(A) illustrates a plan cross-section view of a lower part of a dust cup unit, and Figure 12(B) illustrates a side cross-section view of the dust cup unit.

The dust cup unit 12 includes the following component parts: a cylindrical dust collecting container 12a having a bottom portion 12a₁, an outer peripheral portion 12a₂, and an opening 12a₃; a cup portion 12b fitted in the opening 12a₃ of the dust collecting container 12a; a filter portion 12c detachably housed in the cup portion 12b; and an inner tube 12d detachably attached to the cup portion 12b so as to be housed in the dust collecting container 12a.

### Dust Collecting Container

The dust collecting container 12a is provided with the locking concave portion 12a₂₁ on the bottom portion 12a₁ side of the outer peripheral portion 12a₂, the locking concave portion lying on a center line P as viewed from the front; and a locking convex portion 12a₂₂ is provided on the opening 12a₃ side on the center line P in the outer peripheral portion 12a₂. The dust collecting container 12a is provided with an inlet 12a₂₃ for taking in dust-containing air at a position deviated from the center line P in the outer peripheral portion 12a₂ as viewed from the front.

As illustrated in Figs. 12(A) and 12(B), the dust collecting container 12a is provided with a quadrangular pyramidal projection 12a₄ at a position deviated from a center position of the bottom portion 12a₁ towards the external side. This projection 12a₄ has a function of preventing dust accumulated in a lower space (a space between the dust collecting container 12a and a small diameter tube 12d₂₁ (to be described below) of the inner tube 12d) of the dust collecting container 12a from being swirled by a whirling air current.

### Cup Portion

The cup portion 12b has the following component parts: a bottom portion having a center hole and a reverse tapered surface around the center hole; a cylindrical outer peripheral portion communicating with the bottom portion; the first locking mechanical section 12b₁ and the second locking mechanical section 12b₂ provided on the outer peripheral portion; a pair of arcuate grooves 12b₃ provided around the center hole on a lower surface of the bottom portion; a packing 12b₄ provided near the bottom of the outer peripheral portion; and a notch portion 12bs provided at an opening end on the opposite side to the bottom portion of the outer peripheral portion.

The cup portion 12b has a detection convex portion 12b₆ provided at a lateral position of the notch portion 12bs on its outer peripheral surface. Functions of this detection convex portion 12b₆ will be described in detail below.

The first locking mechanical section 12b₁ includes the following component parts: an inverted U-shaped rib provided on the outer peripheral surface of the cup portion 12b; a pivoting piece 12b₁₁ attached to the rib so as to swingably pivot about a horizontal axis; a locking nail 12b₁₂ provided at the lower end of the pivoting piece 12b₁₁ and detachably locking to the locking convex portion 12a₂₂ of the dust collecting container 12a; and a coil spring 12b₁₃ that biases in a direction in which the locking nail 12b₁₂ locks to the locking convex portion 12a₂₂.

The second locking mechanical section 12b₂ includes the following component parts: a convex rib provided on the outer peripheral surface of the cup portion 12b; a slide member 12b₂₁ attached to this rib in a vertically slidable manner; the engaging nail 12b₂₂ provided at an upper end of the slide member 12b₂₁ and detachably engaging with the engaging concave portion 11a₁₃ of the vacuum cleaner body 10; and a coil spring 12b₂₃ that biases in a direction in which the engaging nail 12b₂₂ engages with the engaging concave portion 11a₁₃.

The second locking mechanical section 12b₂ includes the locking concave portion 12c₁₁ provided in the filter portion 12c (to be described below) as a component part.

### Filter Portion

The filter portion 12c includes a pleated filter body 12c₁ having an annular outer peripheral frame portion and also includes a packing portion 12c₂ covering an outer peripheral portion of the outer peripheral frame portion of the filter body 12c₁. The locking concave portion 12c₁₁ that opens inward in a radial direction is provided on an inner peripheral surface of the outer peripheral frame portion of the filter body 12c₁; and the positioning convex portion 12c₂₁ is provided on the outer peripheral surface of the packing portion 12c₂.

The locking concave portion 12c₁₁ and the positioning convex portion 12c₂₁ are disposed substantially opposite to each other.

When the filter portion 12c is fitted into an opening of the cup portion 12b, the positioning convex portion 12c₂₁ of the filter portion 12c is dropped into the notch portion 12b₅ of the cup portion 12b and is positioned. Then, the locking concave portion 12c₁₁ of the filter portion 12c is disposed at a position of the second locking mechanical section 12b₂ of the cup portion 12b. The packing portion 12c₂ is supported in close contact with a step portion provided on the inner peripheral surface of the opening of the cup portion 12b.

### Inner Tube

The inner tube 12d has a tubular filter portion 12d₁ detachably attached to the cup portion 12b and also has a tubular partition member 12d₂ detachably attached to the tubular filter portion 12di.

The tubular filter portion 12d₁ has a tubular frame 12d₁₁ having a plurality of slits extending in an axial direction and also has a mesh member 12d₁₂ provided on an outer peripheral portion of the tubular frame 12d₁₁.

The tubular frame 12d₁₁ has a pair of locking pieces 12d₁₁₁, which are provided at an upper end of the outer peripheral portion of the tubular frame and detachably lock into a pair of arcuate grooves 12b₃ of the cup portion 12b, respectively, and also has a pair of locking pieces 12d₁₁₂, which are provided at a lower end of the outer peripheral portion of the tubular frame and detachably lock into a pair of arcuate grooves 12d₂₃₁ (to be described below), respectively, of the partition member 12d₂.

The partition member 12d₂ has the following component parts: the small diameter tube 12d₂₁; a large diameter tube 12d₂₂; and a flange portion 12d₂₃ for connecting an upper end of the small diameter tube 12d₂₁ with an inner circumferential surface of the large diameter tube 12d₂₂.

The flange portion 12d₂₃ has the pair of arcuate grooves 12d₂₃₁ provided on an upper surface of the flange portion and detachably locking to the pair of locking pieces 12d₁₁₂, respectively, at a lower end of the tubular filter portion 12di.

As illustrated in Figs. 12(A) and 12(B), the large diameter tube 12d₂₂ has an outer flange 12d₂₂₁ at its lower end. This outer flange 12d₂₂₁ has an elliptical shape in a plan view so that a gap between the outer flange 12d₂₂₁ and the dust collecting container 12a does not become even because of being elliptical; and narrow gaps S₁ and wide gaps S₂ are formed. This can prevent the dust having been accumulated in a lower part of the dust collecting container 12a from being blown up by whirling airflow G and also can prevent a decrease in suction power caused by the dust that attaches to the tubular filter portion 12d₁ of the inner tube 12d.

More specifically, the bottom portion 12a₁ of the dust collecting container 12a has the projection 12a₄ for preventing the dust from swirling; however, there is a possibility that the suction power may decrease, because a distance from the flange portion 12d₂₃ of the partition member 12d₂ to the bottom portion 12a₁ of the dust collecting container 12a is short; and in the absence of the outer flange 12d₂₂₁, the dust hitting the projection 12a₄ rises up (or is blown up) to the tubular filter portion 12d₁ above the partition member 12d₂ and attaches to the tubular filter portion.

In order to solve this problem, the outer flange 12d₂₂₁ is provided at a lower end of the partition member 12d₂ so that the dust is not likely to fly up to the upper side.

If the gap between an outer peripheral surface of the outer flange 12d₂₂₁ and an inner peripheral surface of the dust collecting container 12a is too narrow, the sucked large dust will not go below the outer flange 12d₂₂₁. In the present invention, the gaps are not even-that is, the narrow gaps S₁ are formed in places where the dust hits the projection 12a₄ and is likely to swirl up, and the wide gaps S₂ are formed in places where the dust is not likely to swirl up-and the outer flange 12d₂₂₁ is configured to be oval, allowing the large dust to fall. In the Embodiments of the present invention, the outer flange 12d₂₂₁ is set to be 61 mm in major diameter D₁, 57 mm in minor diameter D₂, 6 mm in narrow gap S₁, and 8 mm in wide gap S₂; however, lengths are not limited to the above-mentioned lengths.

Since the projection 12a₄ is provided at only one place, normally one narrow gap S₁ should be enough to be placed as well. In the Embodiments of the present invention, the partition member 12d₂ and the tubular filter portion 12d₁ are configured to be detachable and to lock into arcuate grooves with use of the locking pieces; and since this locking structure has a locking mechanism which can lock even if the structure is rotated 180 degrees to the opposite side; and depending on a locking position of the partition member 12d₂ with respect to the tubular filter portion 12d₁, one narrow gap S₁ may not be enough to be placed at the position where the dust is likely to swirl up; thus the one narrow gap S₁ is placed to be 180 degrees opposite to the other narrow gap (or is placed at a diametrically opposed location to the other narrow gap). In other words, even if the partition member 12d₂ locks on either side of 180 degrees with respect to the tubular filter portion 12d₁, the positions of the narrow gaps S₁ with respect to the projection 12a₄ are the same; that is, the outer flange 12d₂₂₁ is formed in an elliptical shape so that either one of the narrow gaps S1 is always at the position where the dust is likely to swirl up.

In the assembled state of the dust cup unit 12, the small diameter tube 12d₂₁ of the partition member 12d₂ fits to a positioning tube 12a₂₄ provided on the inner bottom surface of the dust collecting container 12a; and the small diameter tube comes in contact with a packing 12a₂₅ provided around the positioning tube 12a₂₄. In this state, a space is formed in the dust collecting container 12a to accumulate the dust mass in the bottom side of the large diameter tube 12d₂₂ of the partition member 12d₂.

### Detachability of Dust Cup Unit from Drive Unit

As illustrated in Figs. 9(A) and 9(B), the attachment forgetting prevention member 11x₅ of the drive unit 11 is provided in the intake tube 11d so as to be rotatable about the shaft Q in a front-rear direction. In a state (illustrated in Fig. 9(A)) in which the dust cup unit 12 is not attached to the drive unit 11, this attachment forgetting prevention member 11x₅ has a first contacting portion 11x₅₁ projecting downward toward the outside from the intake tube 11d and also has a second contacting portion 11x₅₂ contained in the intake tube 11d.

When attaching the dust cup unit 12 (with the filter portion 12c) to the vacuum cleaner body 10, the locking concave portion 12a₂₁ of the dust cup unit 12 is hooked over the hooking member 11x₂ of the vacuum cleaner body 10 in a state where the dust cup unit 12 tilts to the intake tube 11d. Then, by making the dust cup unit 12 be parallel to the intake tube 11d with the hooking member 11x₂ as a fulcrum, the locking convex portion 11a₁₂ of the vacuum cleaner body 10 locks into the locking concave portion 12c₁₁ of the dust cup unit 12; and the engaging nail 12b₂₂ of the second locking mechanical section 12b₂ of the dust cup unit 12 engages with the engaging concave portion 11a₁₃ of the drive unit 11, and the installation is completed.

At this time, as illustrated in Figs. 9(A) and 9(B), the positioning convex portion 12c₂₁ of the filter portion 12c comes in contact with the first contacting portion 11x₅₁ of the attachment forgetting prevention member 11x₅ and pushes the first contacting portion 11x₅₁ into the concave portion 11x₁₂, with the result that the attachment forgetting prevention member 11x₅ rotates; and the second contacting portion 11x₅₂ also rotates and protrudes downward toward the outside. However, as the first contacting portion 11x₅₁ is pushed deep into the concave portion 11x₁₂, the second contacting portion 11x₅₂ is housed in the concave portion 11x₁₂ again while approaching (or getting close to) the attachment forgetting prevention member 11x₅. Meanwhile, the detection convex portion 12b₆ of the dust cup unit 12 also moves toward the concave portion 11x₁₂; and the detection convex portion 12b₆ is housed in the concave portion 11x₁₂ while avoiding the second contacting portion 11x₅₂.

When detaching (or removing) the dust cup unit 12 from the vacuum cleaner body 10, it makes it easy to detach (or remove) the dust cup unit by slanting the dust cup unit 12 against the intake tube 11d with use of the hooking member 11x₂ as a fulcrum while pressing the slide member 12b₂₁ of the second locking mechanical section 12b₂ downward.

In the following, through the use of Figs. 9(A) and 9(B), an example case will be given where the dust cup unit without the filter portion 12c in the cup portion 12b is installed in the drive unit 11.

For example, if a user forgets to install the filter portion 12c in the cup portion 12b and attempts to attach the dust cup unit to the drive unit 11, the positioning convex portion 12c₂₁ of the filter portion 12c comes in contact with the first contacting portion 11x₅₁ of the attachment forgetting prevention member 11x₅ so that the first contacting portion 11x₅₁ cannot be pushed into the concave portion 11x₁₂, as described above; and the notch portion 12bs (see Fig. 10(B)) of the cup portion 12b approaches (or moves closer to) the first contacting portion 11x₅₁. Then, the detection convex portion 12b₆ of the cup portion 12b comes in contact with the second contacting portion 11x₅₂ of the attachment forgetting prevention member 11x₅ and attempts to push the second contacting portion 11x₅₂ into the concave portion 11x₁₂.

At this time, the detection convex portion 12b₆ tries to rotate the second contacting portion 11x₅₂ toward the opposite side of the first contacting portion 11x₅₁ side; however, the second contacting portion 11x₅₂ hits a side wall constituting the concave portion 11x₁₂ and is prevented from turning. As a result, since the cup portion 12b cannot approach (or cannot come close to) the intake tube 11d any further, the engaging nail 12b₂₂ of the second locking mechanical section 12b₂ of the dust cup unit cannot engage with the engagement concave portion 11a₁₃ of the drive unit 11 and cannot lock into the engagement concave portion; and the dust cup unit (without having the filter portion 12c) cannot be attached to the drive unit 11.

This enables the user to notice that the filter portion is not installed in the dust cup unit. Namely, the electric vacuum cleaner of the present invention can notify the user of forgetting the installation of the filter portion and of urging the user to properly use the electric vacuum cleaner; and this can prevent problems such that the electric vacuum cleaner is operated without the filter portion, and the drive unit having sucked in the dust breaks down (or get broken).

### Structure of Extension Tube

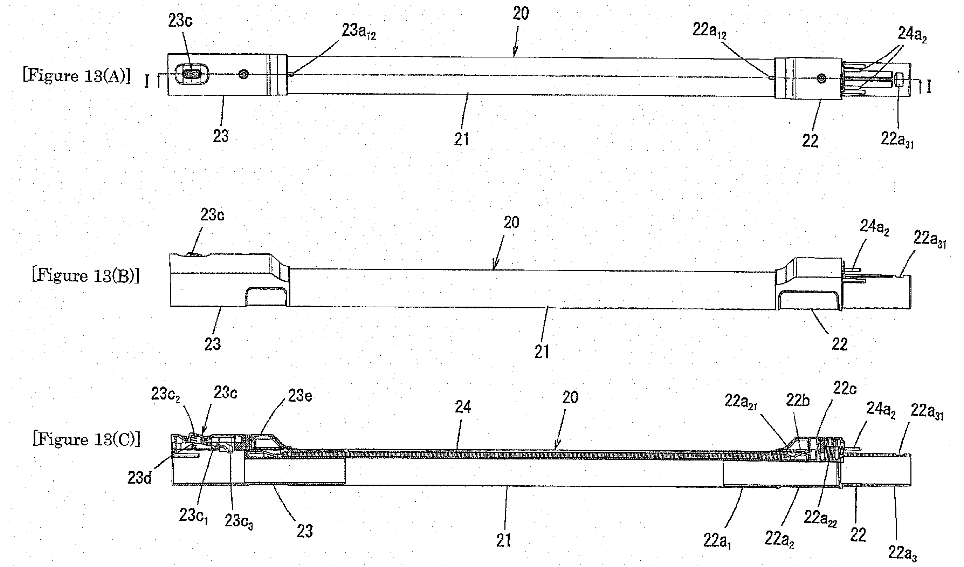

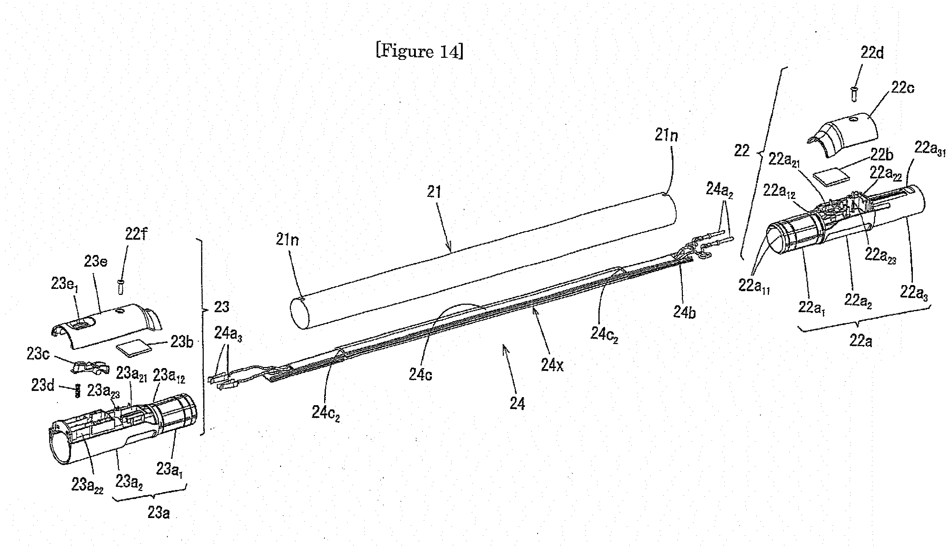

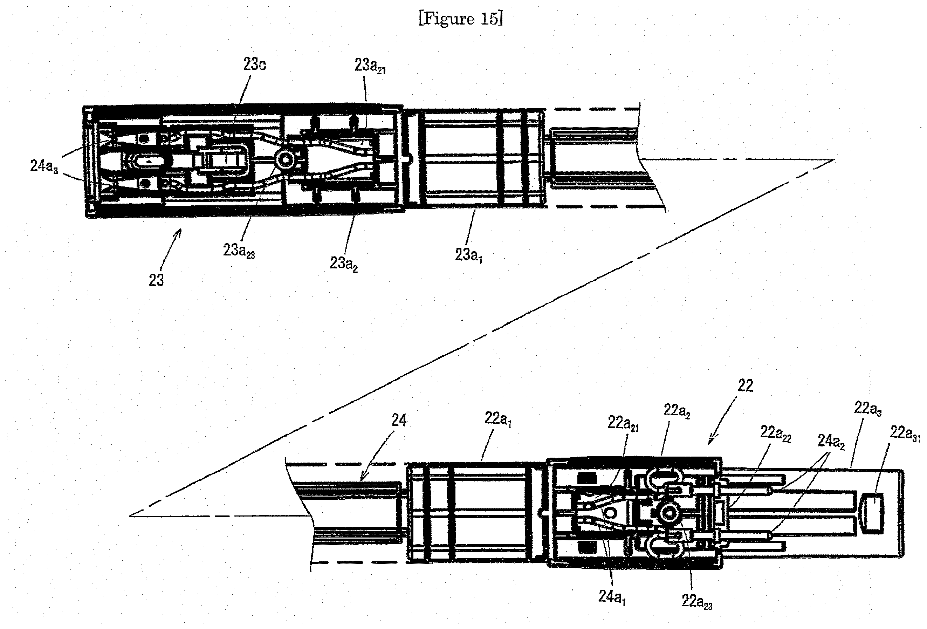

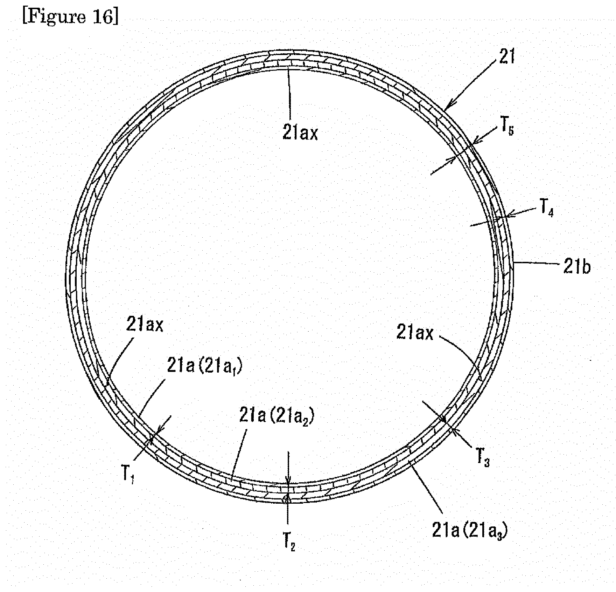

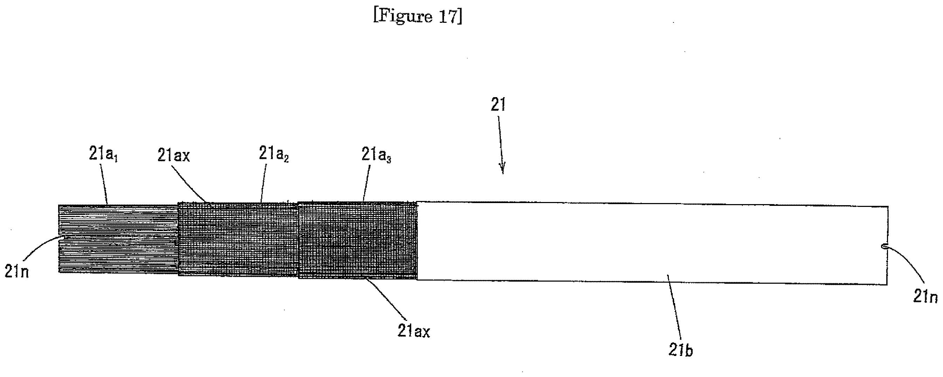

Figure 13(A) illustrates a front view of an extension tube of the electric vacuum cleaner in accordance with Embodiment 1; Figure 13(B) illustrates a side view of the extension tube; and Figure 13(C) illustrates a cross-section view taken from line I-I of Fig. 13(A). Figure 14 illustrates an exploded view of the extension tube of Fig. 13(A); Figure 15 illustrates an explanatory view of an inner structure of a first connecting pipe unit and a second connecting pipe unit of the extension tube of Fig. 13(A) which are viewed from the front side; Figure 16 illustrates a transverse cross-section view of the tube body of the extension tube of Fig. 13(A); and Figure 17 illustrates an explanatory view of a layered structure of the tube body of the extension tube of Fig. 13(A).

The extension tube 20 includes the following component parts: a circular tube body 21; a tubular first connecting pipe unit 22 disposed at one end of the tube body 21 and detachably connected with the vacuum cleaner body; a tubular second connecting pipe unit 23 disposed at the other end of the tube body 21 and detachably connected with a suction port body; and a conductive unit 24 laid in the first connecting pipe unit 22, the tube body 21, and the second connecting pipe unit 23 therethrough.

### Tube Body

The tube body 21 is formed by laminating a plurality of tubular carbon fiber layers 21a and has a pipe shape (body pipe 21). In accordance with Embodiment 1, the laminated tubular carbon fiber layers 21a are formed by layering a first tubular carbon fiber layer 21a₁, a second tubular carbon fiber layer 21a₂, and a third tubular carbon fiber layer 21a₃ in this order from the inside. The third tubular carbon fiber layer 21a₃ has a resin coating layer 21b as an outermost layer laminated on its outer peripheral surface. The tube body is processed as dry carbon. The dry carbon is to be molded in a pressurizable kiln using a pressure-resistant device capable of setting an inside pressure to be high.

The first tubular carbon fiber layer 21a₁ is made of a unidirectional carbon fiber sheet having a plurality of carbon fibers extending parallel to a pipe longitudinal direction.

The second tubular carbon fiber layer 21a₂ and the third tubular carbon fiber layer 21a₃ each are made of a bidirectional carbon fiber sheet having a plurality of warps and a plurality of wefts of carbon fibers.

Used as the unidirectional carbon fiber sheet and the bidirectional carbon fiber sheet may be commercially-available prepreg sheets in which the carbon fibers are impregnated with a resin in advance. Besides the warps and the wefts, the carbon fibers can be made of diagonally crossed threads. Combinations of the crossed threads with the warps and the wefts, etc. may be freely arranged.

Using the commercially-available prepreg sheets, the tube body 21 can be prepared by molding and laminating the first tubular carbon fiber layer 21a₁, the second tubular carbon fiber layer 21a₂, and the third tubular carbon fiber layer 21a₃ one by one using a mold by a known method. For example, a method for wrapping layers around a shaft rod, such as a metal rod, may be used.

In accordance with Embodiment 1, small notches 21n for positioning connection positions of the first connecting pipe unit 22 and the second connecting pipe unit 23 are formed by notching the already-formed tube body 21 at opposed positions of its both ends.

In the tube body 21, a thickness T₁ of the first tubular carbon fiber layer 21a₁ is about 0.1 mm; a thickness T₂ of the second tubular carbon fiber layer and a thickness T₃ of the first tubular carbon fiber layer 21a₁ each is about 0.3 mm; a thickness T₄ of the resin coating layer 21b is about 0.1 mm; and an overall thickness T₅ is about 0.8 mm. The thickness of the first to third tubular carbon fiber layers 21a₁ to 21a₃ is based on a thickness of the unidirectional carbon fiber sheet and a thickness of the bidirectional carbon fiber sheet used for forming the layers.

Each tubular carbon fiber layer 21a has both ends extending in the longitudinal direction of the tube; and end surfaces of these both ends have end surface contacting portions 21ax coming in contact with each other. The end surface contacting portions 21ax are formed by fusion-bonding the end surfaces of the both ends of the unidirectional carbon fiber sheet and of the bidirectional carbon fiber sheet used for forming each tubular carbon fiber layer 21a.

In the tube body 21, one of the end surface contacting portions 21ax of the tubular carbon fiber layers 21a is configured not to overlap with the end surface contacting portion 21ax of the adjacent tubular carbon fiber layer 21a. In accordance with Embodiment 1, each end surface contacting portion 21ax is disposed at a position shifted from a center angle by 120°. In this way, the positions of the end surface contacting portions 21ax can be shifted uniformly in the circumferential direction; and thus the tube body does not have any strong or weak parts, enabling the tube body to be uniformized (or making the tube body uniform).

Since each tubular carbon fiber layer 21a has the end surface contacting portion 21ax, each tubular carbon fiber layer 21a is formed having a uniform thickness without any bumps (or bulges). That is, in a case of simply wrapping one carbon fiber sheet threefold around a metal rod at the time of preparing the tube body, bumps are formed between an end of the first (or undermost) wrapping and a beginning of the second (or middle) wrapping and between an end of the second (or middle) wrapping and a beginning of the third (or outermost) wrapping; however, such bumps are not formed in the tube body 21 of Embodiment 1 because the first to third tubular carbon fiber layers 21a₁ to 21a₃ are independent from each other. This enables the overall tube body 21 to have the uniform thickness and to be evenly rigid.

### First Connecting Pipe Unit

The first connecting pipe unit 22 is to be connected with the vacuum cleaner body 10 and has a connecting pipe body 22a, a fragment 22b, and a (first) cover 22c.

The connecting pipe body 22a has the following component parts: a (first) fixed portion 22a₁ inserted into one end of the tube body 21 and fixed thereto with an adhesive; a (first) terminal holder 22a₂ communicating with the fixed portion 22a₁ and holding a pair of male terminals 24a₂ (to be described below) of the conductive unit 24; and an inserting portion 22a₃ communicating with the terminal holder 22a₂ and inserted into the front opening 11d₁ of the vacuum cleaner body 10.

The fixed portion 22a₁ has at its inner peripheral surface a pair of receiving pieces 22a₁₁ for receiving one end of a support plate 24b (to be described below) of the conductive unit 24; and the fixed portion has a positioning convex portion 22a₁₂ engaging with one of the notches 21n of the tube body 21 at a boundary portion between the fixed portion and the terminal holder 22a₂ on its outer peripheral surface.

The terminal holder 22a₂ has a concave portion on the positioning convex portion 22a₁₂ side on its outer circumferential surface; and in this concave portion, a (first) drawing port 22a₂₁ is formed for drawing the pair of male terminals 24a₂ and lead wires 24a₁ of the conductive unit 24 from the inside to the outside.

The concave portion of the terminal holder 22a₂ is provided with a rib structure 22a₂₂ for holding the pair of male terminals 24a₂ parallel to each other at predetermined intervals and also with a boss part 22a₂₃ into which a tapping screw 22d for attaching the cover 22c is screwed.

The inserting portion 22a₃ has, on the positioning convex portion 22a₁₂ side on an outer peripheral surface of the inserting portion, the engaging concave portion 22a₃₁ detachably engaging with the engaging nail 11x₁₁ of the locking member 11x₁ of the vacuum cleaner body 10.

The fragment 22b is to cover the drawing port 22a₂₁ of the connecting pipe body 22a through which the pair of lead wires 24a₁ is laid; and when using the electric vacuum cleaner 1, the fragment functions to prevent dust in the air passing through the extension tube 20 from flowing from the drawing port 22a₂₁ to the male terminal 24a₂ side, and protects the male terminals 24a₂.

The cover 22c covers the concave portion of the terminal holder 22a₂ of the connecting pipe body 22a by screwing the tapping screw 22d into the boss part 22a₂₃; and the cover presses the fragment 22b against the connecting pipe body 22a and fixes the fragment to the connecting pipe body.

### Second Connecting Pipe Unit

The second connecting pipe unit 23 is connected with the intake port body 40, and has the following component parts: a connecting pipe body 23a, a fragment 23b, a locking member 23c, a coil spring 23d, and a (second) cover 23e.

The connecting pipe body 23a has a (second) fixed portion 23a₁ inserted into the other end of the tube body 21 and fixed thereto with an adhesive, and also has a (second) terminal holder 23a₂ communicating with the fixed portion 23a₁ and holding a pair of female terminals 24a₃ (which will be described below) of the conductive unit 24.

The fixed portion 23a₁ has on its inner peripheral surface a pair of receiving pieces (not illustrated) for receiving the other end of the support plate 24b of the conductive unit 24; and the fixed portion has a positioning convex portion 23a₁₂ engaging with the other one of the notches 21n of the tube body 21 at a boundary portion between the fixed portion and the terminal holder 23a₂ on its outer peripheral surface.

The terminal holder 23a₂ has a concave portion on the positioning convex portion 23a₁₂ side on its outer peripheral surface; and in this concave portion, a (second) drawing port 23a₂₁ is formed for drawing the pair of female terminals 24a₃ and the lead wires 24a₁ of the conductive unit 24 from the inside to the outside. The concave portion of the terminal holder 23a₂ is provided with a rib structure 23a₂₂ for holding the pair of female terminals 24a₃ parallel to each other at predetermined intervals and also with a boss part 23a₂₃ into which a tapping screw 22f for attaching the cover 23e is screwed.

The locking member 23c has a shaft 23c₁ and also has a button 23c₂ and a locking nail 23c₃ communicating with each other so as to sandwich the shaft 23c₁ therebetween; and the locking member is mounted in the concave portion of the terminal holder 23a₂. The shaft 23c₁ is rotatably attached to the rib structure 23a₂₂. The locking nail 23c₃ is configured to protrude into the connecting pipe body 23a from an opening formed on a recess bottom surface of the connecting pipe body 23a.

The coil spring 23d is provided in the recess of the connecting pipe body 23a so as to bias the button 23c₂ of the locking member 23c outwardly.

The fragment 23b is to cover the drawing port 23a₂₁ of the connecting pipe body 23a through which the pair of lead wires 24a₁ is laid; and when using the electric vacuum cleaner 1, the fragment functions to prevent dust in the air passing through the extension tube 20 from flowing from the drawing port 23a₂₁ to the female terminal 24a₃ side, and protects the female terminals 24a₃.

The cover 23e has an opening 23e₁ that exposes the button 23c₂ of the locking member 23c to the outside. This cover 23e covers the concave portion of the terminal holder 23a₂ of the connecting pipe body 23a by screwing the tapping screw 22f into the boss part 23a₂₃, and presses the fragment 23b against the connecting pipe body 23a and fixes the fragment to the connecting pipe body so as to prevent the locking member 23c from falling off.

### Conductive Unit

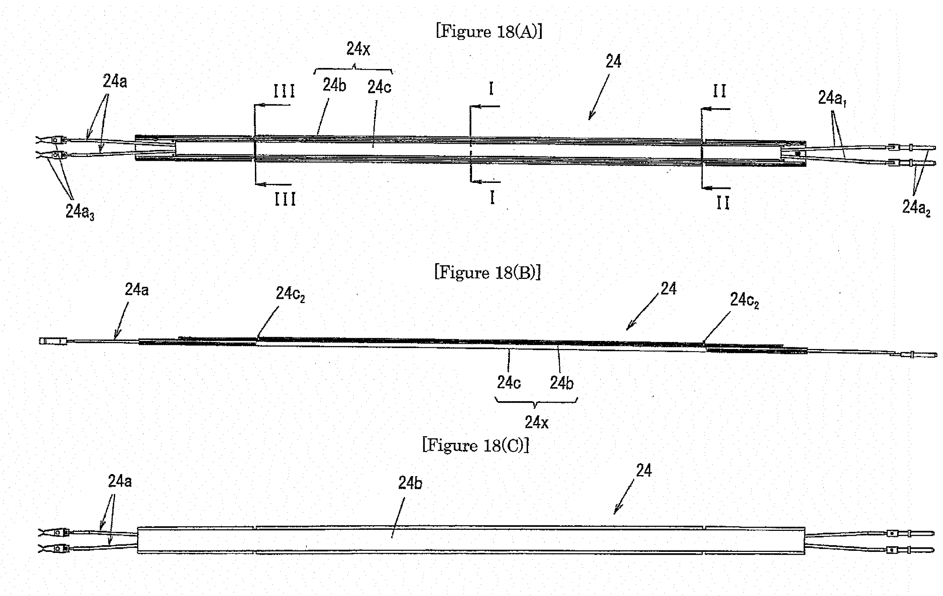

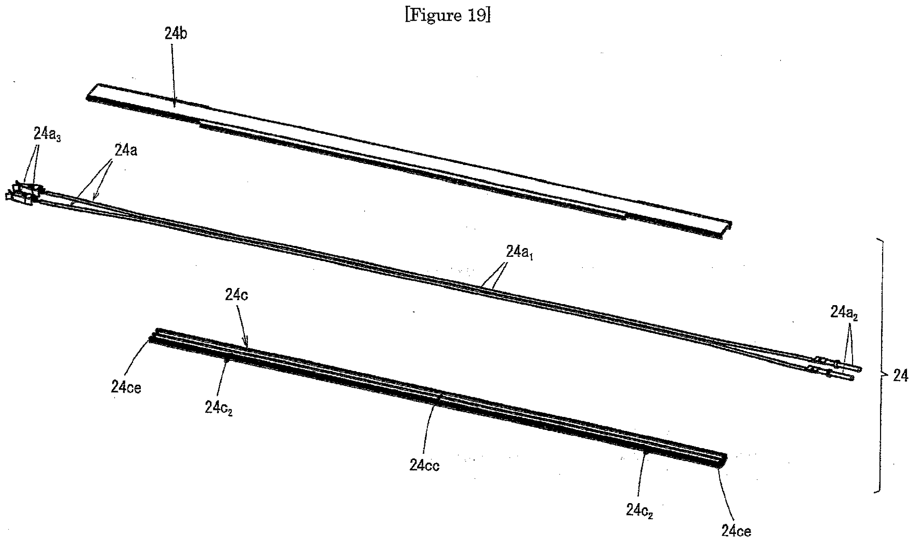

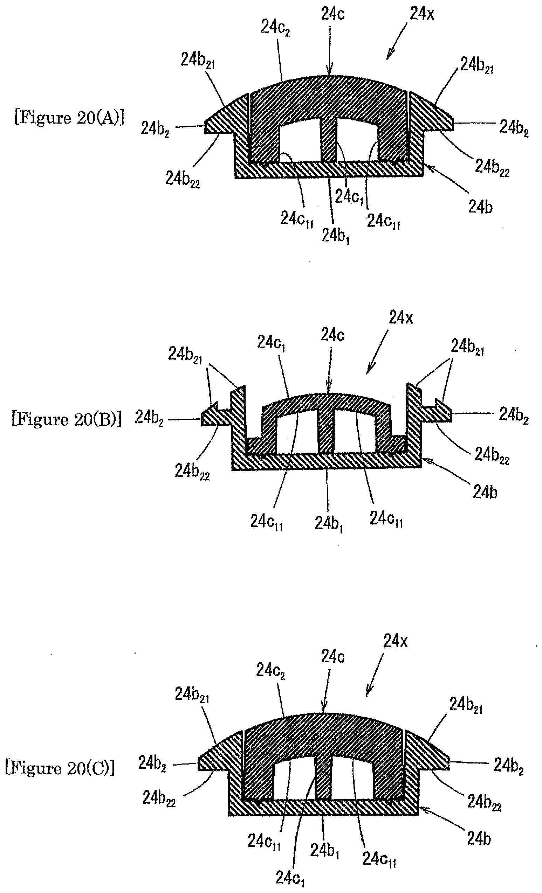

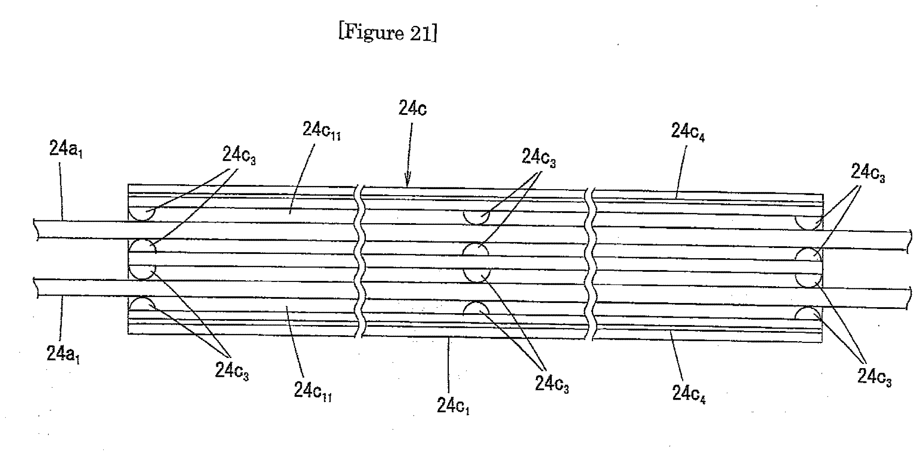

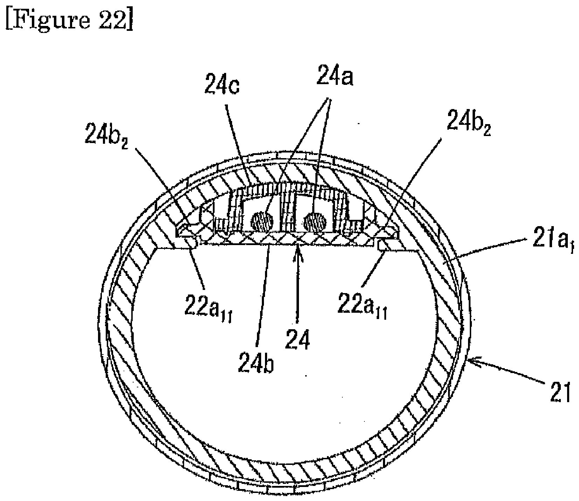

Figure 18(A) illustrates a front view of a conductive unit in the extension tube of Fig. 13(A); Figure 18(B) illustrates a side view of the conductive unit; and Figure 18(C) illustrates a rear view of the conductive unit. Figure 19 illustrates an exploded view of the conductive unit of Fig. 18(A). Figure 20(A) illustrates a cross-section view taken from line I-I of Fig. 18(A); Figure 20(B) illustrates a cross-section view taken from line II-II of Fig. 18(A); and Figure 20(C) illustrates a cross-section view taken from line III-III of Fig. 18(A). Figure 21 illustrates lead wires in a cover plate of the conductive unit of Fig. 18(A); and Figure 22 illustrates a transverse cross-section view of the first connecting pipe unit of the extension tube of Fig. 13(A). Figures 20(A) and 20(B) illustrate the cross-section views of projecting pieces 24c₂, respectively, which will be described below.

The conductive unit 24 includes a pair of conductive cables 24a and an elongated hollow plate 24x for housing the pair of conductive cables 24a.

The hollow plate 24x has the support plate 24b and a cover plate 24c that are configured to contain and sandwich the pair of conductive cables 24a therebetween; and these component parts are integrated by ultrasonic welding at a time of assembling the conductive unit 24. These component parts may be integrated by an adhesive.

The pair of conductive cables 24a and the support plate 24b are longer in length than the tube body 21; the pair of conductive cables 24a are longer in length than the support plate 24b; and the support plate 24b is longer in length than the cover plate 24c.

Each conductive cable 24a has the lead wires 24a₁ covered with an insulating tube, and also has the pin-shaped male terminals 24a₂ and the clip-shaped female terminals 24a₃, both of the terminals being electrically connected with both ends of the lead wires 24a₁.

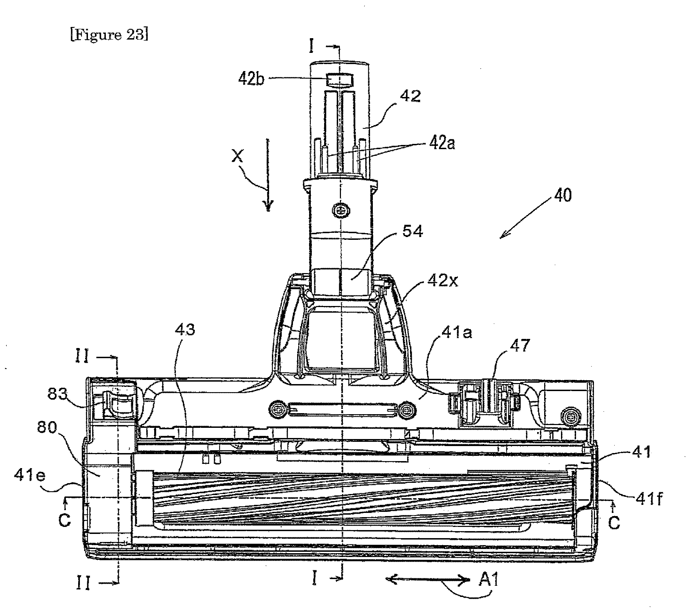

In a case where the extension tube 20 is connected with the vacuum cleaner body 10 and the intake port body 40, the male terminals 24a₂ of the extension tube 20 are plugged into and electrically connected with the female terminals 11y₁₂, respectively, of the vacuum cleaner body 10; and the male terminals 42a (to be described below) of the intake port body 40 are plugged into and electrically connected with the female terminals 24a₃, respectively, of the extension tube 20 (see Fig. 23).

The support plate 24b has a base portion 24b₁ having a concave transverse plane and also has a pair of hooking pieces 24b₂ provided along upper end portions of both side surfaces of the base portion 24b₁; and the support plate is made of an insulating resin (such as an ABS resin).

A bottom of the base portion 24b₁ of the support plate 24b for receiving the cover plate 24c is flat.

The cover plate 24c has a base portion 24c₁ whose transverse plane is nearly m-shaped, and also has the projecting pieces 24c₂ provided on the outer surface of both end portions of the base portion 24c₁; and the cover plate is made of an insulating resin (such as an ABS resin). The pair of projecting pieces 24c₂ at the both end portions play a role of embankments (or banks) to block objects, such as dirt, from entering a space between the projecting pieces 24c₂.

The base portion 24c₁ has a pair of grooves 24c₁₁ provided along a longitudinal direction at a center of a width direction and respectively housing the pair of conductive cables 24a.

A transverse plane of an outer surface of the base portion 24c₁ opposite to the grooves 24c₁₁ has an arc shape; and a transverse plane of an outer surface of the projecting piece 24c₂ also has an arc shape.

A transverse plane of an outer surface of the pair of hooking pieces 24b₂ of the support plate 24b has an arcuate portion 24b₂₁ that is continuous with each arc projecting piece 24c₂ of the cover plate 24c, and also has a flat surface portion 24b₂₂.

To the base portion 24c₁, a pair of hemispherical ribs 24c₃ are respectively provided at both end portions 24ce and an intermediate portion 24cc of the pair of grooves 24c₁₁, the pair of hemispherical ribs sandwiching the lead wire 24a₁ therebetween that is housed in each groove 24c₁₁ so as to prevent the lead wire to be displaced (or misaligned). The hemispherical ribs 24c₃ need not be a pair; and the hemispheric ribs may be in one place or may be placed alternately at equal intervals.

On both sides of each groove 24c₁₁ of the base portion 24c₁, a pair of ridges 24c₄ is provided along a longitudinal direction.

The conductive unit 24 contains each of the conductive cables 24a in each groove 24c₁₁ of the cover plate 24c; and the support plate 24b covers the groove 24c₁₁ side; and then an inner surface of the support plate 24b comes in contact with the pair of ridges 24c₄ of the cover plate 24c and is ultrasonic-welded with these ridges. Instead of the ultrasonic welding, an adhesive may be used.

In the assembled conductive unit 24, the support plate 24b is longer in length than the cover plate 24c; and each conductive cable 24a is longer in length than the support plate 24b, with the result that a part of both ends of each conductive cable 24a is exposed to the outside while being supported by the support plate 24b.

In the above descriptions, the conductive cables 24a are referred to as the pair of conductive cables, but are not limited to this. For example, only one conductive cable may be used. In this case, the one cable may have two conductive cables inside, allowing the two cables to be one cable. This allows the one cable to be laid through one of the two grooves 24c₁₁ (see Fig. 20).

### Assembly of Extension Tube

In the following, one example of how the extension tube 20 is assembled will be described.

Firstly the conductive unit 24 is inserted into the tube body 21; and then the pair of male terminals 24a₂ of the conductive unit 24 is incorporated (or inserted) into the first connecting pipe unit 22, and the pair of female terminals 24a₃ of the conductive unit 24 is incorporated (or inserted) into the second connecting pipe unit 23.

The pair of male terminals 24a₂ is inserted into the connecting pipe body 22a of the first connecting pipe unit 22, is drawn from the drawing port 22a₂₁ to the outside, and is fixed to the rib structure 22a₂₂. The pair of male terminals 24a₂ fixed to the rib structure 22a₂₂ projects from the rib structure 22a₂₂ in a longitudinal direction. At this time, one end of the pair of hooking pieces 24b₂ of the support plate 24b of the conductive unit 24 is placed on the pair of receiving pieces 22a₁₁ of the connecting pipe body 22a.

Portions facing inner surfaces of the tube body 21 and the first and second connecting pipe units 22 and 23-i.e., outer surfaces of the pair of hooking pieces 24b₂ of the support plate 24b and an outer surface of the cover plate 24c-in the conductive unit 24 are configured to have an arc shape so that the conductive unit 24 can lay along the inner surfaces of the tube body 21 and the first and second connecting pipe units 22 and 23.

Secondly the fragment 22b and the cover 22c are attached to the connecting pipe body 22a; and the fixed portion 22a₁ of the connecting pipe body 22a is inserted into one end of the tube body 21 and is fixed thereto with an adhesive. At this time, the positioning convex portion 22a₁₂ of the first connecting pipe unit 22 engages with one of the notches 21n of the tube body 21 so as to position the positioning convex portion.

The pair of female terminals 24a₃ is inserted into the connecting pipe body 23a of the second connecting pipe unit 23, is drawn from the drawing port 23a₂₁ to the outside, and is fixed to the rib structure 23a₂₂. The pair of male terminals 24a₂ fixed to the rib structure 22a₂₂ respectively communicate with a pair of openings provided on the rib structure 22a₂₂. At this time, the other ends of the pair of hooking pieces 24b₂ of the support plate 24b of the conductive unit 24 are respectively placed on the pair of receiving pieces 22a₁₁ of the connecting pipe body 23a (see Fig. 22). This allows the both ends of the conductive unit 24 to be supported by the first and second connecting pipe units 22 and 23, and thus this makes it possible for the conductive unit 24 to keep its position uplifted (or put up) without being supported inside the tube body 21. Since the conductive unit 24 is supported by only the both ends of the first and second connecting pipe units 22 and 23 each in the tube body 21, the tube body 21 need not have any additional component parts, leading to its assembly at low cost and improvement in assembly operation. To avoid any gap (or interstice) between the conductive unit 24 and the inner surface of the tube body 21 that could be formed by warpage (or a curve) of the conductive unit, the support plate 24b has the shape like the letter "U" whose transverse plane is shallow; and a transverse plane of the cover plate 24c has the shape like the letter "W"; and these component parts each are provided with a rib in a longitudinal direction.

Lastly the fragment 23b and the cover 23e are attached to the connecting pipe body 23a; and the fixed portion 23a₁ of the connecting pipe body 23a is inserted into the other end of the tube body 21 and fixed thereto with an adhesive. At this time, the positioning convex portion 23a₁₂ of the second connecting pipe unit 23 engages with the other one of the notches 21n of the tube body 21 so as to position the positioning convex portion.

The assembly of the extension tube 20 is now completed.

### Intake Port Body

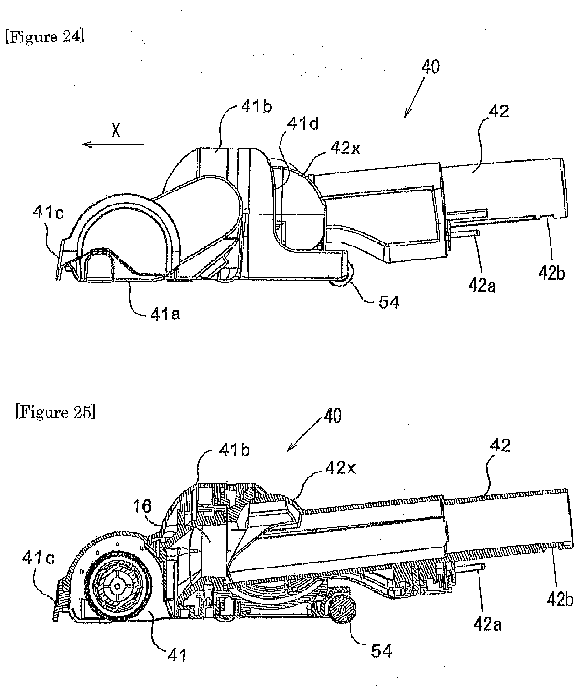

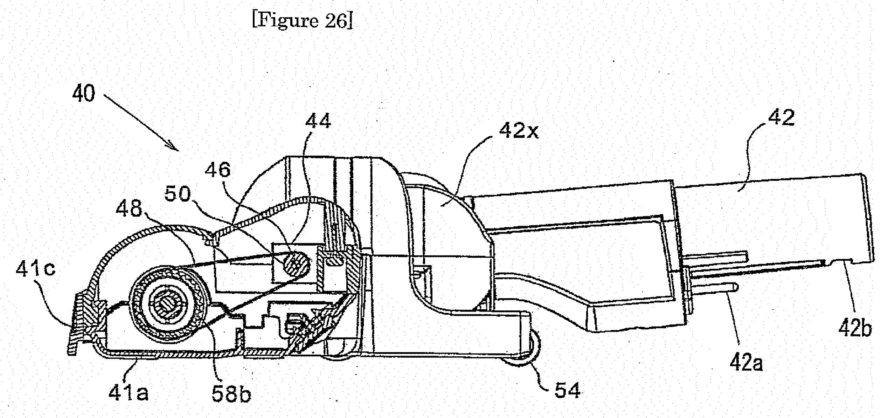

Figure 23 illustrates a bottom view of an intake port body of the electric vacuum cleaner in accordance with Embodiment 1; Figure 24 illustrates a side view of the intake port body illustrated in Fig. 23. Figure 25 illustrates a cross-section view of the intake port body taken from line I-I of Fig. 23; and Figure 26 illustrates a cross-section view of the intake port body taken from line II-II of Fig. 23.

As illustrated in Fig. 23 to Fig. 26, the intake port body 40 includes the following component parts: a bottom plate 41a; a top plate 41b opposed to the bottom plate 41a; a front plate 41c and a rear plate 41d that are respectively placed at the front and at the back in a moving direction (in a direction of an X arrow indicated in Fig. 23); and a left plate 41e and a right plate 41f that are respectively placed on the left and on the right of the top plate 41b in the moving direction.

As illustrated in Fig. 23, the intake port body 40 includes the following component parts: an intake port 41 that is provided to the bottom plate 41a and extends in a right-and-left direction (in a direction of an A1 arrow); a connecting pipe 42 connected to the rear side of the intake port 41 through a connecting shaft 42x; a rotary brush 43 rotatably attached around an axis extending in a right-and-left direction in the intake port 41; a suction channel 16 connecting the intake port 41 to the connecting pipe 42 (see Fig. 25); a motor for rotary brush 44 driving the rotary brush 43 (see Fig. 26); a brush cover 80 covering a left end of the rotary brush 43 (as illustrated in Fig. 23); and a lifting detecting device 47 and wheels 54, all of which being attached to the bottom plate 41a.

As illustrated in Fig. 26, a motor output gear 50 fixed to a motor output shaft 46 of the motor for rotary brush 44 is fastened to a gear 58b attached to the rotary brush 43 with a timing belt 48.

Once a start-up switch is turned on with use of the operating portion 11e (see Fig. 1), and floor cleaning starts, the rotary brush 43 driven by the motor for rotary brush 44 sweeps and collects dust on the floor, and the dust is carried from the intake port 41 to the dust cup unit 12 (see Fig. 1) through the suction channel 16 and the connecting pipe.

The lifting detecting device 47 has the following component parts: a swinging lever having a wheel; a switch body swingably supporting the swing lever; and a torsion coil spring biasing the swinging lever toward the bottom side; and the switch body is connected with a circuit board for rotary brush-driving motor contained in the bottom plate 41a; and the wheel of the swinging lever is downwardly exposed from the bottom plate 41a to the outside.

When the intake port body 40 is lifted and spaced away from the floor, the lifting detecting device 47 is triggered and forces to stop the operation of the motor for rotary brush 44.

This intake port body 40 has a pair of lead wires that is placed therein and is electrically connected with the motor for rotary brush 44 and the lifting detecting device 47; and the pair of lead wires are electrically connected with the pair of pin-shaped male terminals 42a, respectively, the male terminals being provided to the connecting pipe 42.

The connecting pipe 42 has at its end a locking concave portion 42b.

The intake port body 40 configured as described above is detachably connected with the second connecting pipe unit 23 of the extension tube 20. Thus the pair of male terminals 42b of the intake port body 40 are respectively inserted into the pair of female terminals 24a₃ of the extension tube 20, and are electrically connected therewith; and the locking nail 23c₃ of the locking member 23c of the extension tube 20 detachably locks into the locking concave portion 42b of the intake port body 40 (see Fig. 1, Fig. 13, and Fig. 14).

### Embodiment 2

In Embodiment 1, the conductive unit 24 is exemplified having the hollow plate 24x comprising the support plate 24b and the cover plate 24c; however, the hollow plate 24x may be formed of only one component part. In this case, for example, the hollow plate is used having a cut line in a longitudinal direction and a concave portion whose transverse plane has the shape of the letter "W"; and a pair of conductive cables is inserted into the hollow plate through the cut line. In another case, a flat tubular hollow plate may be used without having any cut line; and a pair of lead wires is inserted into the hollow plate; and then both ends of each lead wire may be soldered to the male terminal and the female terminal, respectively.

### Embodiment 3

In Embodiment 1, the conductive unit 24 having the hollow plate 24x is exemplified; however, the hollow plate 24x may be omitted (or may not be used). In this case, for example, a pair of lead wires 24a₁ may be taped together inside the tube body 21 so that the lead wires are kept together and would not be separated from each other; and ribs may be provided so as to sandwich both ends of the lead wires 24a₁ inside the fixed portions 22a₁ and 23a₁ of the first and second connecting pipe units 22 and 23.

### Embodiment 4

In Embodiment 1, the extension tube of the stick electric vacuum cleaner is described; however, the extension tube of the present invention may be applicable to (or usable for) a canister electric vacuum cleaner as well.

### Conclusions

The extension tube for the electric vacuum cleaner of the present invention is to connect the intake port body having the intake port to the vacuum cleaner body that is connected to the intake port body and sucks in dust through the intake port; and
the extension tube has the pipe made from the dry carbon.

This structure enables the pipe, that is, the extension tube, to have a reduced weight (or to be lightweight) and yet to be strong and also enables the electric vacuum cleaner to be easier to operate (or to improve in handleability).

The extension tube has the pipe formed by layering the plurality of carbon fiber sheets.

This structure enables the pipe to have a reduced weight and to improve in strength. The pipe can improve in strength particularly for a force applied in a radial direction of the pipe.

The extension tube for the electric vacuum cleaner of the present invention comprises the tube body; the tubular first and second connecting pipe units respectively placed at the both ends of the tube body; and the conductive unit placed in the first connecting pipe unit, the tube body, and the second connecting pipe unit therethrough; wherein
the conductive unit has the pair of conductive cables having at both ends thereof the male terminals and the female terminals, respectively;
the first connecting pipe unit has the first fixed portion connecting with one end of the tube body and also has the first terminal holder communicating with the first fixed portion having the first drawing port that draws the male terminals of the pair of conductive cables from the inside to the outside; and
the second connecting pipe unit has the second fixed portion connecting with the other end of the tube body and also has the second terminal holder communicating with the second fixed portion having the second drawing port that draws the female terminals of the pair of conductive cables from the inside to the outside.

The extension tube for the electric vacuum cleaner of the present invention may be configured as follows, and may be formed by properly combining these configurations.
(1) The tube body may have notches at its both ends, the notches being opposed to each other;
   the first connecting pipe unit may have a first positioning convex portion at a boundary portion between the first fixed portion and the first terminal holder, and the first positioning convex portion engages with one of the notches of the tube body; and
   the second connecting pipe unit may have a second positioning convex portion at a boundary portion between the second fixed portion and the second terminal holder, and the second positioning convex portion engages with the other one of the notches of the tube body.
   This structure enables the first and second connecting pipe units to be positioned at the both ends of the tube body and to be fixed with an adhesive, with the result that fasteners (or fixing parts), such as a screw, are less needed; and a weight of the tube body can be reduced.
(2) The conductive unit may have a hollow plate that houses the pair of conductive cables;
   the first fixed portion may have a pair of receiving pieces that receives one end of the hollow plate; and
   the second fixed portion may have a pair of receiving pieces that receives the other end of the hollow plate.
   This structure enables the pair of conductive cables to be protected in the hollow plate. This structure also enables the hollow plate to be supported at its both ends by the first and second connecting pipe units; with the result that a structure in which the conductive unit is supported inside the tube body can be omitted (or simplified); and a weight of the tube body can be reduced.
(3) The first connecting pipe unit may have a first fragment that covers the first drawing port and may also have a first cover attached to the first terminal holder so as to press the first fragment against the first drawing port side; and
   the second connecting pipe unit may have a second fragment that covers the second drawing port and may also have a second cover attached to the second terminal holder so as to press the second fragment against the second drawing port side.
   This structure can prevent dust in flowing air through the extension tube from flowing from the first and second drawing ports to the male terminal side and the female terminal side.
(4) The first connecting pipe unit may have an inserting portion communicating with the first terminal holder; and
   the inserting portion of the first connecting pipe unit may have an engaging concave portion on its outer surface; and the second terminal holder of the second connecting pipe unit may have on its inner surface a locking member having a locking nail.
   This structure enables the first connecting pipe unit of the extension tube to be detachably inserted into and to join with the intake tube of the vacuum cleaner body, and also enables the connecting pipe of the intake port body to be detachably inserted into and to join with the second connecting pipe unit of the extension tube.

The disclosed Embodiments should be recognized as exemplifications in all respects and should not be recognized as limitative. The scope of the present invention is not described by the expositions above but is described in claims; and the scope of the present invention is intended to include the meanings (or the contents) equivalent to the scope of the claims and also include all alterations (and modifications) within the claims.

### [Reference Signs List]

- 1: Electric vacuum cleaner
- 20: Extension tube
- 21: Tube body (body pipe)
- 21n: Notch
- 22: First connecting pipe unit
- 22a₁: First fixed portion
- 22a₁₁: Receiving piece
- 22a₂: First terminal holder
- 22a₂₁: First drawing port
- 22a₃₁: Engaging concave portion
- 22b: First fragment
- 22c: First cover
- 23: Second connecting pipe unit
- 23a₁: Second fixed portion
- 23a₁₂: Second positioning convex portion
- 23a₂: Second terminal holder
- 23a₂₁: Second drawing port
- 23a₃: Inserting portion
- 23b: Second fragment
- 23c: Locking member
- 23c₃: Locking nail
- 23e: Second cover
- 24: Conductive unit
- 24a: Conductive cable
- 24a₂: Male terminal
- 24a₃: Female terminal
- 24x: Hollow plate
- 40: Intake port body
- 41: Intake port

## Claims

1. An extension tube for an electric vacuum cleaner, the extension tube connecting an intake port body having an intake port to a vacuum cleaner body connected to the intake port body and sucking in dust through the intake port, wherein
the extension tube is **characterized by** having a pipe made from dry carbon.

2. The extension tube according to claim 1, having a pipe formed by layering a plurality of carbon fiber sheets.

3. An extension tube for an electric vacuum cleaner, the extension tube comprising a tube body; a first connecting pipe unit and a second connecting pipe unit each provided at both ends of the tube body; and a conductive unit laid between the first connecting pipe unit and the second connecting pipe unit; wherein
the conductive unit has a pair of conductive cables having at both ends thereof male terminals and female terminals, respectively;
the first connecting pipe unit has a first fixed portion connected with one end of the tube body and also has a first terminal holder communicating with the first fixed portion having a first drawing port for drawing the male terminals of the pair of conductive cables outside; and
the second connecting pipe unit has a second fixed portion connecting with the other end of the tube body and also has a second terminal holder communicating with the second fixed portion having a second drawing port for drawing the female terminals of the pair of conductive cables outside.

4. The extension tube according to claim 3, wherein
the tube body has notches at opposed positions of its both ends;
the first connecting pipe unit has a first positioning convex portion at a boundary portion between the first fixed portion and the first terminal holder, and the first positioning convex portion engages with one of the notches of the tube body; and
the second connecting pipe unit has a second positioning convex portion at a boundary portion between the second fixed portion and the second terminal holder, and the second positioning convex portion engages with the other one of the notches of the tube body.

5. The extension tube according to claim 3 or 4, wherein
the conductive unit has a hollow plate housing the pair of conductive cables;
the first fixed portion has a pair of receiving pieces receiving one end of the hollow plate; and
the second fixed portion has a pair of receiving pieces receiving the other end of the hollow plate.

6. The extension tube according to any one of claims 3 to 5, wherein
the first connecting pipe unit has a first fragment covering the first drawing port and also has a first cover attached to the first terminal holder so as to press the first fragment against the first drawing port; and
the second connecting pipe unit has a second fragment covering the second drawing port and also has a second cover attached to the second terminal holder so as to press the second fragment against the second drawing port.

7. The extension tube according to any one of claims 3 to 6, wherein
the first connecting pipe unit has an inserting portion communicating with the first terminal holder; and
the inserting portion of the first connecting pipe unit has an engaging concave portion on its outer surface; and the second terminal holder of the second connecting pipe unit has on its inner surface a locking member having a locking nail.
